# EUROPEAN PATENT APPLICATION

(11) **EP 4 779 528 A1**
(43) Date of publication of application: **22.07.2026**
(21) Application number: 25219836.1
(22) Date of filing: 01.12.2025
(51) Int. Cl.: G06N 10/00, G06N 10/20

(54) **INFORMATION PROCESSING PROGRAM, INFORMATION PROCESSING METHOD, AND INFORMATION PROCESSING DEVICE**

(30) Priority: 17.01.2025 JP 2025007085
(71) Applicant: FUJITSU LIMITED, Kawasaki-shi, Kanagawa 211-8588 (JP)
(72) Inventor: YAMAGUCHI, Masaomi, Kawasaki-shi, 211-8588 (JP)
(74) Representative: Haseltine Lake Kempner LLP

(57) **Abstract**

An information processing device executes a quantum circuit multiple times and classifies combinations of determination results of first conditional branches in a first portion of the quantum circuit into multiple groups, based on the similarity of the combinations of the determination results of a second conditional branch in the second portion. The information processing device generates first information indicating a method of allocating physical qubits to the first portion, and generates and associates with each group, second information indicating a method of allocating physical qubits to the second portion. After executing the first portion according to the generated first information, the information processing device controls an executing unit to execute the second portion according to any of the second information, according to the current combination of the determination results of the first conditional branch.

## Description

### FIELD

The embodiments discussed herein are related to an information processing program, an information processing method, and an information processing device.

### BACKGROUND

Conventionally, quantum circuits exist that represent a sequence of operations performed on multiple logical qubits. The quantum circuit may include conditional branches, for example. When the quantum circuit is executed by an actual quantum computer, physical qubits are allocated to logical qubits, respectively. In addition, a swap gate may be inserted in the quantum circuit so as to respectively reallocate the physical qubits to the logical qubits during allocation thereof to the quantum circuit.

In a related art, for example, an initialized external control field is applied to a qubit corresponding to a quantum gate, and actual measurement data of the quantum gate is collected. In addition, for example, there is a technique of performing operation scheduling based on the topology of a quantum computer and unscheduled quantum operations. In addition, for example, there is a technique for performing real-time quantum error correction. In addition, for example, there is a technique for performing parallel optimization of quantum error correction that is continuously executed. For example, refer to Published Japanese-Translation of PCT Application, Publication No. 2023-524188; Published Japanese-Translation of PCT Application, Publication No. 2023-523109; U.S. Patent Application Publication No. 2023/0054273; and International Publication No. WO 2017/078734.

### SUMMARY

It is desirable in one aspect of the embodiments to at least solve the above problems in the conventional technologies.

According to an aspect of an embodiment, an information processing program for causing a computer to execute a process, the process including: specifying in a quantum circuit having a plurality of conditional branches, a first portion having one or more first conditional branches and a second portion being downstream to the first portion and having one or more second conditional branches, the one or more first conditional branches and the one or more second conditional branches being included in the plurality of conditional branches; obtaining a plurality of execution paths respectively representing a plurality of combinations of determination results of the plurality of conditional branches in the quantum circuit, the plurality of execution paths being obtained based on a result of executing the quantum circuit a plurality of times using a quantum computer having a plurality of physical qubits, the plurality of combinations of the determination results including a first plurality of combinations of the determination results of the one or more first conditional branches in the first portion and a second plurality of combinations of the determination results of the one or more second conditional branches in the second portion; referring to the obtained plurality of execution paths and thereby classifying the first plurality of combinations into a plurality of groups based on similarity among the second plurality of combinations; generating first information representing a method of allocating the plurality of physical qubits to the first portion; for each of the plurality of groups, generating and associating with the each of the plurality of groups, second information representing the method of allocating the plurality of physical qubits to the second portion, the second information being generated based on the second plurality of combinations of the determination results; and controlling the quantum computer configured to execute the quantum circuit to allocate the plurality of physical qubits to the first portion according to the generated first information and execute the first portion, and to subsequently allocate the plurality of physical qubits to the second portion according to the generated second information and execute the second portion, the second information being associated with a group that is among the plurality of groups and to which a current combination of the first plurality of combinations belongs, the current combination being in the executed first portion.

### BRIEF DESCRIPTION OF DRAWINGS

Reference will now be made, by way of example only, to the following drawings, in which:
Fig. 1 is an explanatory diagram depicting an example of an information processing method according to an embodiment.
Fig. 2 is an explanatory diagram depicting an example of an information processing system 200.
Fig. 3 is a block diagram of an example of a hardware configuration of an information processing device 100.
Fig. 4 is a block diagram depicting an example of a hardware configuration of a quantum computing device 201.
Fig. 5 is a block diagram depicting an example of a functional configuration of the information processing device 100.
Fig. 6 is an explanatory diagram depicting a first operation example of the information processing device 100.
Fig. 7 is an explanatory diagram depicting the first operation example of the information processing device 100.
Fig. 8 is an explanatory diagram depicting the first operation example of the information processing device 100.
Fig. 9 is an explanatory diagram depicting the first operation example of the information processing device 100.
Fig. 10 is an explanatory diagram depicting the first operation example of the information processing device 100.
Fig. 11 is an explanatory diagram depicting the first operation example of the information processing device 100.
Fig. 12 is an explanatory diagram depicting the first operation example of the information processing device 100.
Fig. 13 is an explanatory diagram depicting the first operation example of the information processing device 100.
Fig. 14 is an explanatory diagram depicting the first operation example of the information processing device 100.
Fig. 15 is an explanatory diagram depicting the first operation example of the information processing device 100.
Fig. 16 is an explanatory diagram depicting the first operation example of the information processing device 100.
Fig. 17 is an explanatory diagram depicting a second operation example of the information processing device 100.
Fig. 18 is an explanatory diagram depicting the second operation example of the information processing device 100.
Fig. 19 is an explanatory diagram depicting the second operation example of the information processing device 100.
Fig. 20 is an explanatory diagram depicting the second operation example of the information processing device 100.
Fig. 21 is an explanatory diagram depicting the second operation example of the information processing device 100.
Fig. 22 is an explanatory diagram depicting the second operation example of the information processing device 100.
Fig. 23 is an explanatory diagram depicting the second operation example of the information processing device 100.
Fig. 24 is an explanatory diagram depicting the second operation example of the information processing device 100.
Fig. 25 is an explanatory diagram depicting the second operation example of the information processing device 100.
Fig. 26 is an explanatory diagram depicting a third operation example of the information processing device 100.
Fig. 27 is an explanatory diagram depicting the third operation example of the information processing device 100.
Fig. 28 is a flowchart depicting an example of an overall processing procedure.

### DESCRIPTION OF EMBODIMENTS

First problems associated with the conventional techniques are discussed. In the related art, it may be difficult to appropriately allocate a physical qubit to each logical qubit so as to improve the reliability of the quantum circuit. For example, an appropriate method of allocating the physical qubits to the logical qubits tends to be different depending on a determination result of the conditional branch, and when the quantum circuit is executed in a specific allocation method, the reliability of the quantum circuit may be reduced.

Embodiments of an information processing program, an information processing method, and an information processing device according to the present disclosure are described in detail with reference to the accompanying drawings.

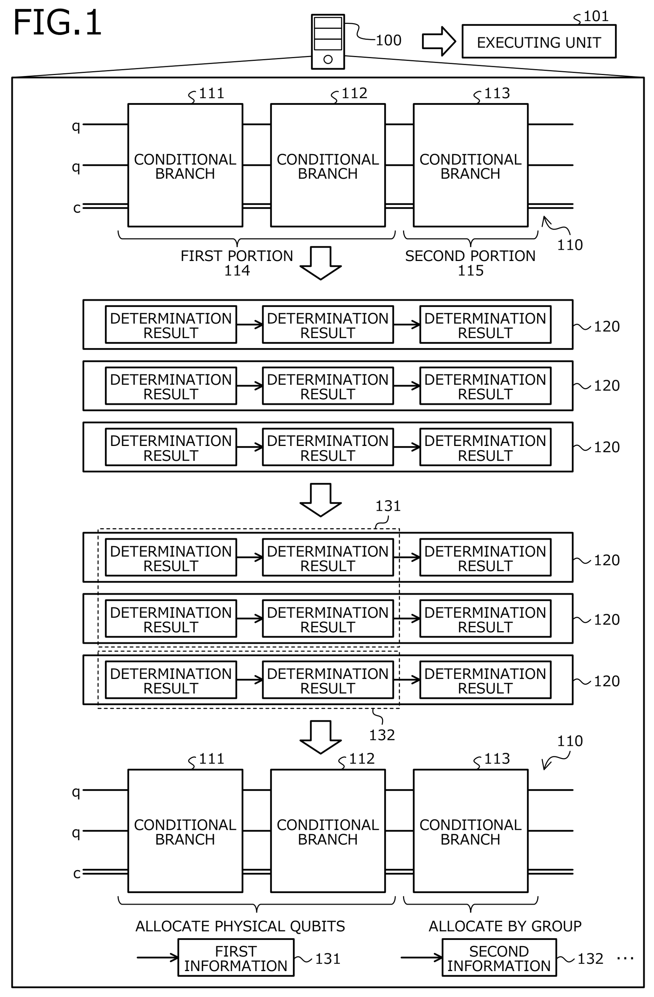

Fig. 1 is an explanatory diagram depicting an example of an information processing method according to an embodiment. The information processing device 100 is a computer for allocating physical qubits to logical qubits. The information processing device 100 is, for example, a server or a personal computer (PC).

Conventionally, there is a quantum computer that performs specific computation by manipulating a quantum state represented by a physical qubit using a quantum mechanical effect. A quantum computer has multiple physical qubits. In an actual quantum computer, an error may occur in a quantum state due to environmental noise, interference between qubits, noise during qubit operation, and the like. In an actual quantum computer, it may be difficult to realize a function of correcting an error. For example, it is difficult to realize a function of correcting an error in an actual quantum computer of a scale called a noisy intermediate scale quantum (NISQ).

The content of a computation performed by the quantum computer is defined by a model called a quantum circuit. A quantum circuit spans multiple logical qubits. Quantum circuits represent, for example, how quantum states represented by logical qubits are manipulated. Quantum circuits include, for example, quantum gates that operate on logical qubits to manipulate the quantum states represented by the logical qubits. The quantum gate is, for example, a Hadamard gate acting on one qubit, a rotation gate acting on one qubit, or the like. The quantum gate is, for example, an entangling gate that acts on multiple qubits.

There are also quantum circuits that exhibit non-deterministic behavior. Specifically, there is a quantum circuit having a conditional branch. The conditional branch corresponds to an if statement, a while statement, or the like. The if statement defines that the quantum gate applied to the logical qubit is switched according to a condition f related to the classical bit. The condition f need not be critical. The condition f may have randomness, for example. The condition f may use an external state such as a past execution history of the quantum circuit. The while statement defines controlling whether to repeatedly apply the quantum gate to the logical qubit according to the condition f on the classical bit.

In the following description, a quantum circuit having a conditional branch and representing a non-deterministic operation may be referred to as a "dynamic quantum circuit". On the other hand, a quantum circuit that does not have a conditional branch and represents a deterministic operation may be referred to as a "static quantum circuit".

Here, when a quantum circuit related to multiple logical qubits is executed by an actual machine of a quantum computer, a specific quantum gate is decomposed into a combination of one or more native gates. Also, certain quantum gates may have to utilize certain physical qubits. For example, a specific quantum gate acting on any logical qubit may not be able to appropriately manipulate the quantum state represented by the logical qubit unless the logical qubit is allocated to a specific physical qubit.

Therefore, when a quantum circuit related to multiple logical qubits is executed by an actual quantum computer, it is desirable to appropriately allocate each logical qubit and each physical qubit included in the quantum computer. For example, it is desirable to allocate each logical qubit and each physical qubit included in the quantum computer as an initial state at a head of the quantum circuit. In addition, for example, it is desirable to reallocate each logical qubit and each physical qubit included in the quantum computer during allocation thereof to the quantum circuit. Reallocation is also referred to as routing, for example.

Specifically, in order to reallocate each logical qubit to each physical qubit, a swap gate is inserted into the quantum circuit. Here, the number of swap gates to be inserted into the quantum circuit may increase depending the allocation of each logical qubit and each physical qubit, and the scale or depth of the quantum circuit may increase.

As the scale or depth of quantum circuits increases, coherence time violations may occur. When the scale or depth of the quantum circuit increases, the probability of occurrence of an error in the quantum state may increase due to environmental noise, interference between qubits, noise during operation of qubits, and the like. Therefore, the reliability of the entire quantum circuit may be reduced. The reliability is Fidelity. Therefore, it is desirable to appropriately allocate each logical qubit and each physical qubit so as to improve the reliability of the entire quantum circuit.

However, it is difficult to appropriately allocate each logical qubit and each physical qubit.

For example, in order to minimize the number of swap gates to be inserted into the static quantum circuit, a first technique of determining in advance a method of allocating each logical qubit and each physical qubit in the entire static quantum circuit is considered. For the first technique, for example, Venturelli, Davide, et al. "Temporal planning for compilation of quantum approximate optimization circuits." Scheduling and Planning Applications Workshop (SPARK). 2017; Wille, Robert, Lukas Burgholzer, and Alwin Zulehner. "Mapping quantum circuits to IBM QX architectures using the minimal number of SWAP and H operations." Proceedings of the 56th Annual Design Automation Conference 2019. 2019; and Li, Gushu, Yufei Ding, and Yuan Xie. "Tackling the qubit mapping problem for NISQ-era quantum devices." Proceedings of the twenty-fourth international conference on architectural support for programming languages and operating systems. 2019 may be referred to.

In addition, for example, a second technique is considered in which a method of allocating each logical qubit and each physical qubit in the entire static quantum circuit is determined in advance so as to minimize integration of evaluation values of reliability for each quantum gate with respect to the static quantum circuit. For the second technique, for example, Tannu, Swamit S., and Moinuddin K. Qureshi. "A case for variability-aware policies for nisq-era quantum computers." arXiv preprint arXiv:1805.10224 (2018); and Niu, Siyuan, et al. "A hardware-aware heuristic for the qubit mapping problem in the nisq era." IEEE Transactions on Quantum Engineering 1 (2020): 1-14 may be referred to.

In addition, for example, a third technique is conceivable in which a method of allocating each logical qubit and each physical qubit in the entire static quantum circuit is determined in advance so as to minimize the time required to execute the static quantum circuit. For the third technique, for example, Niu, Siyuan, et al. "A hardware-aware heuristic for the qubit mapping problem in the nisq era." may be referred to.

Here, for example, the first technique, the second technique, or the third technique may be applied to a dynamic quantum circuit by ignoring a partial circuit related to the conditional branch in the dynamic quantum circuit or fixing the determination result of the conditional branch. In this case, it is difficult to appropriately allocate each logical qubit and each physical qubit.

For example, an appropriate method of allocating each logical qubit and each physical qubit tends to differ depending on the determination result of the conditional branch included in the dynamic quantum circuit. Therefore, when the first technique, the second technique, or the third technique is applied to the dynamic quantum circuit, there is a problem in that the predetermined method of allocating the logical qubits and the physical qubits is not appropriate depending on the determination result of the conditional branch.

In addition, for example, a fourth technique is conceivable in which a method of allocating each logical qubit and each physical qubit is determined in preparation for the next actual execution of the dynamic quantum circuit, based on a result of actually testing the dynamic quantum circuit. In the fourth technique, for example, based on the result of statistically analyzing the determination result of the conditional branch when the dynamic quantum circuit is actually tried, the method of allocating each logical qubit and each physical qubit is determined so as to minimize the value of the predetermined objective function. The predetermined objective function evaluates, for example, the number of swap gates to be inserted into the dynamic quantum circuit.

Also in the fourth technique, it is difficult to appropriately allocate each logical qubit and each physical qubit. In the fourth technique, there is a problem in that a predetermined method of allocating the logical qubits and the physical qubits based on a result of actually trying the dynamic quantum circuit is not appropriate depending on a determination result of a conditional branch when the dynamic quantum circuit is actually executed.

On the other hand, a method of dynamically reallocating each logical qubit and each physical qubit according to the determination result of the conditional branch during the execution of the dynamic quantum circuit is considered. In this method, there is a problem that it is difficult to reallocate each logical qubit and each physical qubit within the coherence time and insert a swap gate into the dynamic quantum circuit.

Therefore, in the present embodiment, an information processing method capable of appropriately allocating physical qubits to logical qubits is described.

In Fig. 1, the information processing device 100 may control an executing unit 101 that executes a quantum circuit 110. The executing unit 101, for example, is provided in the information processing device 100. The executing unit 101 may be, for example, an actual machine of a quantum computer provided outside the information processing device 100.

The quantum circuit 110 is a dynamic quantum circuit. The quantum circuit 110 has multiple conditional branches. Another conditional branch may be nested in any of the multiple conditional branches. The conditional branch is, for example, an if statement or a while statement. In the example depicted in Fig. 1, the quantum circuit 110 specifically includes conditional branches 111 to 113. The conditional branches 111 to 113 are, for example, if statements.

The information processing device 100 specifies a first portion 114 having one or more first conditional branches and a second portion 115 having one or more second conditional branches, the first portion 114 and second portion 115 being portions included in the quantum circuit 110. The second portion 115 is downstream to the first portion 114. The first conditional branch is, for example, an if statement or a while statement. The second conditional branch is, for example, an if statement or a while statement.

For example, the information processing device 100 divides the quantum circuit 110 into the first portion 114 having a first number of first conditional branches and the second portion 115 having a second number of second conditional branches and thereby specifies the first portion 114 and the second portion 115. The first number and the second number are set in advance by the user.

The first portion 114 and the second portion 115 may be set in advance by the user. The information processing device may specify the first portion 114 and the second portion 115 set in advance by the user in the quantum circuit 110. In the example depicted in Fig. 1, the first conditional branches are specifically the conditional branches 111 and 112. The second conditional branch is specifically the conditional branch 113.

By separately handling the first portion 114 and the second portion 115, the information processing device 100 may dynamically switch the method of allocating the multiple physical qubits to the second portion 115 according to the actual combinations of the determination results of the first conditional branches in the first portion 114. The information processing device 100 performs, for example, a series of processes described in (1-1) to (1-5) below.

(1-1) The information processing device 100 obtains multiple execution paths 120 respectively representing combinations of determination results of conditional branches in the quantum circuit 110, based on results of executing the quantum circuit 110 multiple times. In the example depicted in Fig. 1, one of the execution paths 120 specifically represents a combination "True→True→True" of the determination results of the conditional branches 111 to 113. Thus, the information processing device 100 may obtain a guideline for determining a method of allocating multiple physical qubits to the quantum circuit 110.

(1-2) The information processing device 100 refers to the obtained execution paths 120 and classifies the combinations of the determination results of the first conditional branches in the first portion 114 into multiple groups, based on the similarity of the combinations of the determination results of the second conditional branch in the second portion 115. The similarity is specified based on, for example, a distribution of combinations of determination results of the second conditional branch. In the example depicted in Fig. 1, specifically, the information processing device 100 classifies the combinations of the determination results of the conditional branches 111 and 112 into multiple groups based on the similarity of the determination results "True" and "False" of the conditional branch 113.

More specifically, the information processing device 100 classifies the combinations of the determination results of the conditional branches 111 and 112 in which the probability of the determination result "True" of the conditional branch 113 is equal to or greater than the probability of "False" into one group. More specifically, the information processing device 100 classifies the combinations of the determination results of the conditional branches 111 and 112 in which the probability of the determination result "True" of the conditional branch 113 is less than the probability of "False" into one group. Accordingly, the information processing device 100 may specify a group of combinations of determination results of the first conditional branch in which it is considered that there is a high probability that the methods of allocating the physical qubits to the second portion 115 are common.

(1-3) The information processing device 100 generates first information 131 indicating a method of allocating the multiple physical qubits to the first portion 114. In the example depicted in Fig. 1, specifically, the information processing device 100 generates the first information 131 which is common to each combination of the determination results of the first conditional branch and represents the method of allocating the multiple physical qubits to the first portion 114. More specifically, the information processing device 100 generates the first information 131 representing a method of allocating the multiple physical qubits to the first portion 114 so as to minimize the number of swap gates inserted into the first portion 114. Thus, the information processing device 100 may make the first portion 114 executable.

(1-5) The information processing device 100 generates and associates with each group of the multiple classified groups, second information 132 indicating a method of allocating the multiple physical qubits to the second portion 115. For example, the information processing device 100 generates the second information 132 indicating the method of allocating the multiple physical qubits to the second portion 115, based on the combination of the determination results of the second conditional branch in the second portion 115 corresponding to each group and associates the second information 132 with the group. Specifically, the information processing device 100 generates the second information 132 based on the combination of the determination results of the second conditional branch corresponding to the group, so as to statistically minimize the number of swap gates to be inserted into the second portion 115 and associates the second information 132 with the group.

In the example depicted in Fig. 1, it is conceivable that the probability of the determination result "True" of the conditional branch 113 is equal to or higher than the probability of "False". In this case, specifically, when the determination result of the conditional branch 113 is "True", the information processing device 100 generates the second information 132 such that the number of swap gates to be inserted into the second portion 115 is reduced.

Accordingly, the information processing device 100 may estimate the combination of the determination results of the second conditional branch before executing the second portion 115 according to the combination of the determination results of the first conditional branch. Thus, the information processing device 100 may estimate a preferable method of allocating the physical qubits to the second portion 115 before executing the second portion 115.

(1-6) The information processing device 100 controls the executing unit 101 to execute the quantum circuit 110 according to the generated first information 131 and the generated second information 132. For example, the information processing device 100 allocates the physical qubits to the first portion 114 according to the generated first information 131 and executes the first portion 114. Accordingly, the information processing device 100 may execute the first portion 114 and obtain the current combination of the determination results of the first conditional branch as a guideline for estimating a preferable method of allocating the physical qubits to the second portion 115.

For example, after executing the first portion 114, the information processing device 100 specifies the second information 132 generated and associated with the group to which the current combination of the determination results of the first conditional branch belongs. For example, the information processing device 100 controls the executing unit 101 to allocate the physical qubits to the second portion 115 according to the specified second information 132 and execute the second portion 115. Accordingly, the information processing device 100 may switch the method of allocating the multiple physical qubits to the second portion 115 according to the current combination of the determination results of the first conditional branches in the first portion 114.

For example, the information processing device 100 may estimate the combination of the determination results of the second conditional branch before executing the second portion 115 according to the combination of the determination results of the first conditional branch. Therefore, the information processing device 100 may estimate a preferable method of allocating the physical qubits to the second portion 115 before executing the second portion 115. Specifically, the information processing device 100 may determine a preferable method of allocating the physical qubits to the second portion 115 according to the second information 132.

For example, the information processing device 100 may appropriately allocate the physical qubits to the second portion 115. Specifically, the information processing device 100 may appropriately allocate the physical qubits to the second portion 115 so as to suppress increases in the scale and depth of the quantum circuit 110 by inserting a quantum gate, such as a swap gate. Therefore, the information processing device 100 may reduce the probability of occurrence of an error in the quantum state and improve the reliability of the entire quantum circuit 110.

The information processing device 100 may generate the second information 132 in advance before executing the quantum circuit 110, and may select any of the second information 132 during execution of the quantum circuit 110 without newly generating the second information 132. Therefore, the information processing device 100 may appropriately reallocate the physical qubits to the second portion 115 within the coherence time.

When it is desired to execute the quantum circuit 110 multiple times after generating the first information 131 and the second information 132, the information processing device 100 may reclassify the combinations of the determination results of the first conditional branch into multiple groups. For example, as described below, the information processing device 100 may execute the quantum circuit 110 multiple times by repeating a series of processes of reclassifying combinations of determination results of the first conditional branch into multiple groups and executing the quantum circuit 110.

For example, the information processing device 100 controls the executing unit 101 to execute the quantum circuit 110 according to the first information 131 and the second information 132, and obtains multiple execution paths when the quantum circuit 110 is executed this time. The information processing device 100 reclassifies the combinations of the determination results of the first conditional branches into multiple groups, based on the obtained execution paths. The information processing device 100 regenerates the first information 131 and the second information 132, based on the result of the reclassification. The information processing device 100 controls the executing unit 101 to execute the quantum circuit 110 according to the re-generated first information 131 and second information 132.

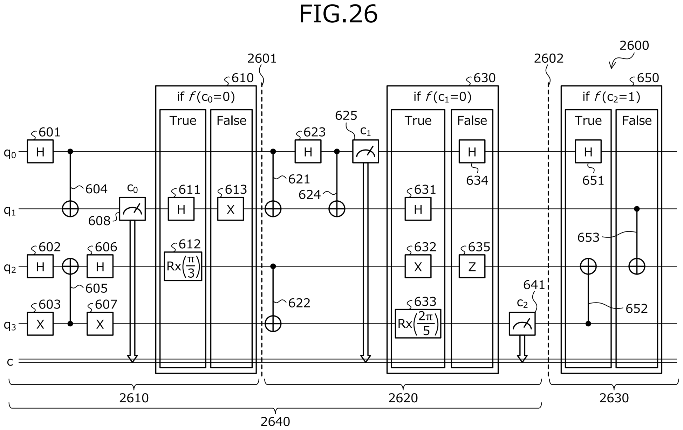

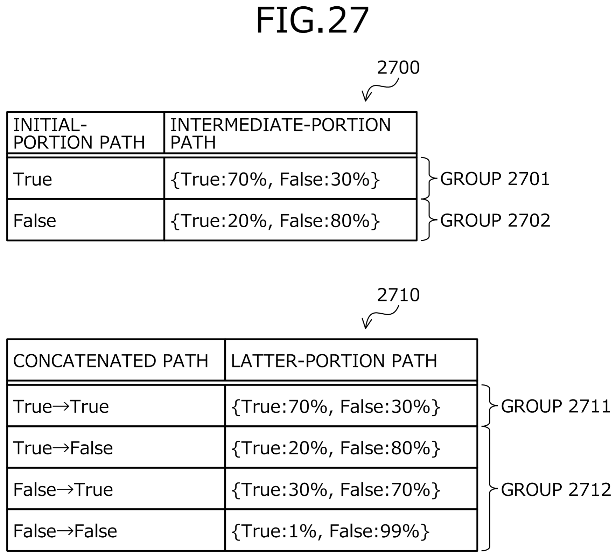

Here, while a case where the quantum circuit 110 is divided into two portions, that is, the first portion 114 having the first number of first conditional branches and the second portion 115 having the second number of second conditional branches is described, the present disclosure is not limited hereto. For example, the quantum circuit 110 may be divided into three or more parts. Specifically, the quantum circuit 110 may be divided into three parts including an initial part, an intermediate part, and a latter portion. A case where the quantum circuit 110 is divided into three or more parts will be described later with reference to Figs. 26 and 27.

Here, while a case where the functions as the information processing device 100 are realized by a single computer is described, the present disclosure is not limited hereto. For example, functions of the information processing device 100 may be realized by cooperation of multiple computers. For example, the function of the information processing device 100 may be implemented on a cloud.

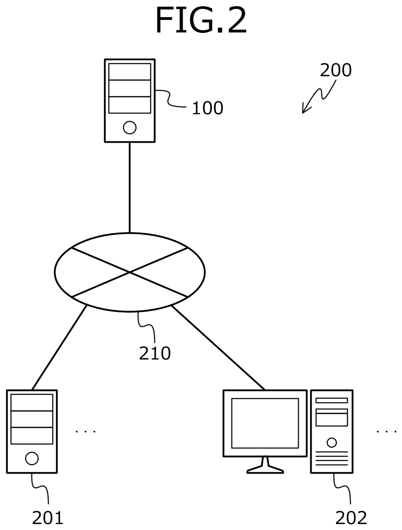

Next, an example of an information processing system 200 to which the information processing device 100 depicted in Fig. 1 is applied will be described with reference to Fig. 2.

Fig. 2 is an explanatory diagram depicting an example of the information processing system 200. In Fig. 2, the information processing system 200 includes the information processing device 100, a quantum computing device 201, and a client device 202.

In the information processing system 200, the information processing device 100 and the quantum computing device 201 are coupled via a wired or wireless network 210. The network 210 is, for example, a local area network (LAN), a wide area network (WAN), the Internet, or the like. In the information processing system 200, the information processing device 100 and the client device 202 are coupled via a wired or wireless network 210.

The information processing device 100 is a computer for allocating physical qubits to logical qubits. The information processing device 100 obtains a processing request for executing a dynamic quantum circuit. The processing request includes, for example, a dynamic quantum circuit. For example, the information processing device 100 obtains the processing request by receiving the processing request from another computer. The other computer is, for example, the client device 202. For example, the information processing device 100 may obtain the processing request by receiving an input of the processing request based on an operation input of the user.

The information processing device 100 obtains real machine information related to the quantum computing device 201. The real machine information includes, for example, the topology of the physical qubits included in the quantum computing device 201. For example, the information processing device 100 obtains the real machine information by receiving the real machine information from another computer. The other computer is, for example, the quantum computing device 201. For example, the information processing device 100 may obtain the real machine information by receiving an input of the real machine information based on an operation input of the user.

The information processing device 100 obtains execution parameters used when the dynamic quantum circuit is executed. The execution parameters include, for example, the number of shots when the dynamic quantum circuit is executed. For example, the information processing device 100 obtains the execution parameters by receiving the execution parameters from another computer. The other computer is, for example, the client device 202. For example, the information processing device 100 may obtain the execution parameters by receiving an input of the execution parameters based on an operation input of the user.

In response to obtaining the processing request, the information processing device 100 uses the quantum computing device 201 to determine the method of allocating the physical qubits included in the quantum computing device 201 to the respective logical qubits of the multiple logical qubits forming the dynamic quantum circuit.

For example, the information processing device 100 divides the dynamic quantum circuit having multiple conditional branches into the first portion having one or more conditional branches and the second portion having one or more conditional branches. For example, the information processing device 100 uses the quantum computing device 201 to try the dynamic quantum circuit multiple times and obtain multiple execution paths. An execution path represents a combination of determination results of respective conditional branches of multiple conditional branches. Specifically, the information processing device 100 transmits an execution request requesting execution of the dynamic quantum circuit to the quantum computing device 201, thereby trying the dynamic quantum circuit multiple times and obtaining multiple execution paths.

For example, based on the multiple execution paths, the information processing device 100 classifies combinations of determination results of conditional branches in the first portion into multiple groups based on similarity of combinations of determination results of conditional branches in the second portion. The information processing device 100 generates, for example, first information indicating a method of allocating the multiple physical qubits to the first portion. For example, the information processing device 100 generates and associates with each group, the second information indicating the method of allocating the multiple physical qubits to the second portion.

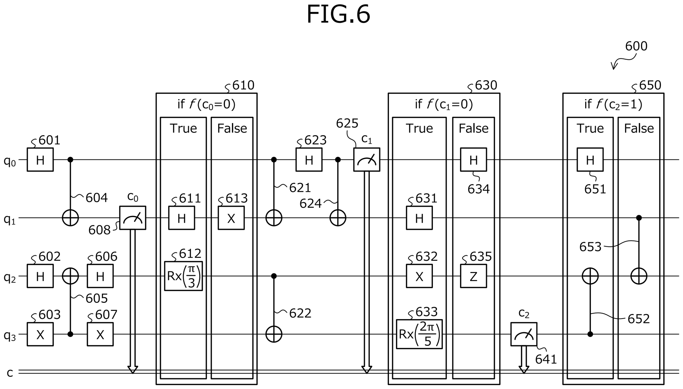

As a result, the information processing device 100 may determine, based on the first information and the second information, a method of allocating the physical qubits included in the quantum computing device 201 to each logical qubit of the multiple logical qubits forming the dynamic quantum circuit. A specific example in which the information processing device 100 determines a method of allocating physical qubits to logical qubits will be described later with reference to, for example, Figs. 6 to 25.

The information processing device 100 uses the quantum computing device 201 to execute the dynamic quantum circuit so as to be able to dynamically change the method of allocating the physical qubits to the second portion, based on the first information and the second information. For example, the information processing device 100 executes the dynamic quantum circuit by transmitting to the quantum computing device 201, an execution request including the first information and the second information and requesting execution of the dynamic quantum circuit.

As a result of executing the dynamic quantum circuit, the information processing device 100 receives, from the quantum computing device 201, a result of measuring each logical qubit of the multiple logical qubits forming the dynamic quantum circuit. The information processing device 100 transmits a result of executing the dynamic quantum circuit to another computer. The other computer is, for example, the client device 202. The information processing device 100 is, for example, a server or a PC.

The quantum computing device 201 is a computer that executes requested computation processing. The quantum computing device 201 may perform quantum computation. The quantum computing device 201 may be capable of performing classical computation. The quantum computing device 201 executes the dynamic quantum circuit one or more times under the control of the information processing device 100. The quantum computing device 201 executes the dynamic quantum circuit, for example, when receiving from the information processing device 100, an execution request requesting execution of the dynamic quantum circuit. The quantum computing device 201 returns the results of executing the dynamic quantum circuit to the information processing device 100.

For example, as a result of executing the dynamic quantum circuit, the quantum computing device 201 returns an execution path to the information processing device 100, the execution path representing a combination of determination results of respective conditional branches of the multiple conditional branches in the dynamic quantum circuit. For example, as a result of executing the dynamic quantum circuit, the quantum computing device 201 returns, to the information processing device 100, a result of measuring each logical qubit of the multiple logical qubits forming the dynamic quantum circuit. The quantum computing device 201 is, for example, an actual machine of a quantum computer.

The client device 202 is a computer utilized by a user who desires to execute a dynamic quantum circuit. The client device 202 generates a processing request for requesting execution of the dynamic quantum circuit based on an operation input of the user and transmits the processing request to the information processing device 100. The client device 202 receives the result of executing the dynamic quantum circuit from the information processing device 100. The client device 202 outputs the result of executing the dynamic quantum circuit so that the user may refer to the result. The client device 202 is, for example, a PC, a tablet terminal, or a smartphone.

Here, while a case where the information processing device 100 uses the quantum computing device 201 to try the dynamic quantum circuit multiple times is described, the present disclosure is not limited hereto. For example, the information processing device 100 may use a quantum simulator to try a dynamic quantum circuit multiple times.

Here, while a case where the information processing device 100 and the quantum computing device 201 are different devices is described, the present disclosure is not limited hereto. For example, the information processing device 100 may have a function as the quantum computing device 201 and may also operate as the quantum computing device 201. Further, although the case where the information processing device 100 and the client device 202 are different devices is described, the present disclosure is not limited thereto. For example, the information processing device 100 may have a function as the client device 202 and may also operate as the client device 202.

In addition, the information processing system 200 may include a control device present at a position close to the quantum computing device 201 on the network 210. For example, the information processing device 100 may control the quantum computing device 201 via a control device.

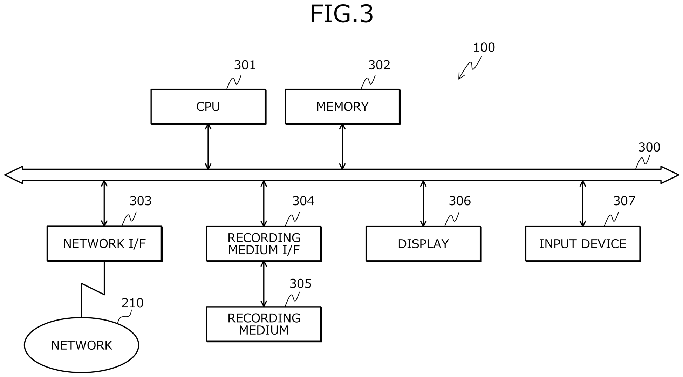

Next, with reference to Fig. 3, an example of a hardware configuration of the information processing device 100 is described.

Fig. 3 is a block diagram of an example of the hardware configuration of the information processing device 100. In Fig. 3, the information processing device 100 has a central processing unit (CPU) 301, a memory 302, and a network interface (I/F) 303. The information processing device 100 also has a recording medium I/F 304, a recording medium 305, a display 306, and an input device 307. Further, the components are connected to each other by a bus 300.

Here, the CPU 301 governs overall control of the information processing device 100. The memory 302, for example, includes a read-only memory (ROM), a random access memory (RAM), and a flash-ROM. In particular, for example, the flash-ROM and/or ROM stores therein various programs and the RAM is used as a work area of the CPU 301. Programs stored to the memory 302 are loaded onto the CPU 301, whereby encoded processes are executed by the CPU 301.

The network I/F 303 is connected to the network 210 via a communications line and is connected to other computers through the network 210. Further, the network I/F 303 administers an internal interface with the network 210 and controls the input and output of data with respect to the other computers. The network I/F 303, for example, is a modem, a LAN adapter, or the like.

The recording medium I/F 304 controls the reading and writing of data with respect to the recording medium 305 under the control of the CPU 301. The recording medium I/F 304 is, for example, a disk drive, a solid-state drive (SSD), a universal serial bus (USB) port, or the like. The recording medium 305 is a nonvolatile memory storing data written thereto under the control of the recording medium I/F 304. The recording medium 305 is, for example, a disk, a semiconductor memory, a USB memory, or the like. The recording medium 305 may be removable from the information processing device 100.

The display 306 displays data such as a cursor, icons, toolboxes, documents, images, or functional information. The display 306 is, for example, a cathode ray tube (CRT), a liquid crystal display, or an organic electroluminescence (EL) display. The input device 307 includes keys for inputting characters, numbers, or various instructions, and inputs data. The input device 307 is, for example, a keyboard or a mouse. The input device 307 may be, for example, a touch panel-type input pad, a numeric keypad, or the like.

The information processing device 100 may include, for example, a camera in addition to the above-described components. Further, the information processing device 100 may include, for example, a printer, a scanner, a microphone, a speaker, or the like in addition to the above-described components. The information processing device 100 may include, for example, the recording medium I/F 304 and/or the recording medium 305 in plural. The information processing device 100 may omit, for example, the display 306 and/or the input device 307. The information processing device 100 may omit the recording medium I/F 304 and the recording medium 305, for example.

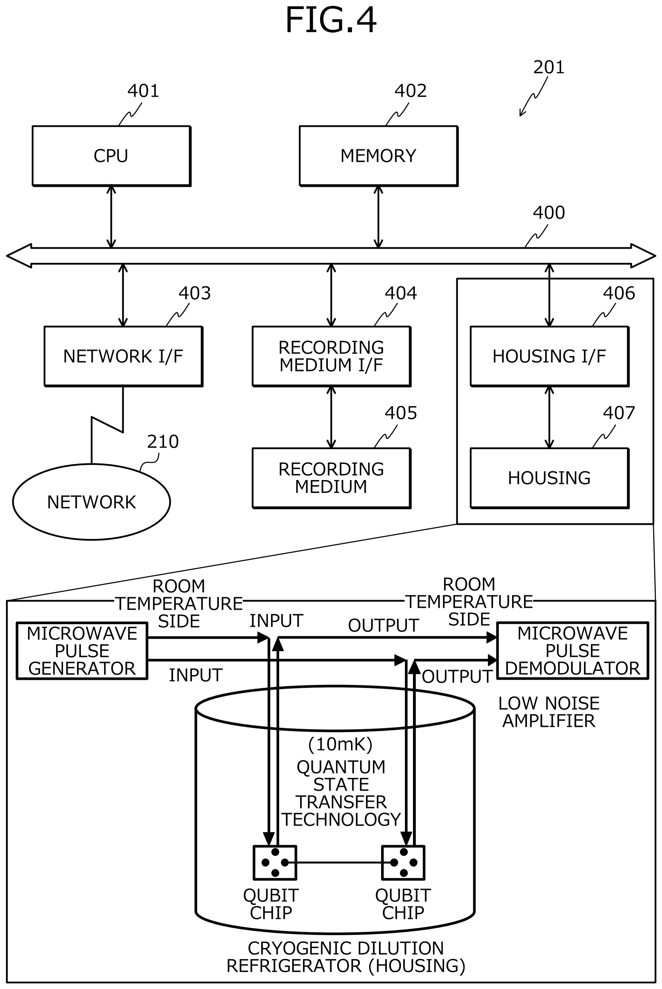

With reference to Fig. 4, an example a hardware configuration of the quantum computing device 201 is described.

Fig. 4 is a block diagram depicting an example of a hardware configuration of the quantum computing device 201. In Fig. 4, the quantum computing device 201 has a CPU 401, a memory 402, a network I/F 403, a recording medium I/F 404, and a recording medium 405. The quantum computing device 201 further has a housing I/F 406 and a housing 407. Further, the components are coupled by a bus 400.

Here, the CPU 401 governs overall control of the quantum computing device 201. The memory 402 includes, for example, a ROM, a RAM, and a flash ROM. For example, the flash ROM and the ROM store various programs, and the RAM is used as a work area for the CPU 401. The programs stored in the memory 402 are loaded onto the CPU 401, whereby the CPU 401 executes encoded processes.

The network I/F 403 is coupled to the network 210 through a communications line and is coupled to other computers via the network 210. The network I/F 403 administers an internal interface with the network 210 and controls the input and output of data from other computers. The network I/F 403 is, for example, a modem or a LAN adapter.

The recording medium I/F 404 controls the reading and writing of data with respect to the recording medium 405 under the control of the CPU 401. The recording medium I/F 404 is, for example, a disk drive, an SSD, a USB port, etc. The recording medium 405 is a nonvolatile memory that stores therein data written thereto under the control of the recording medium I/F 404. The recording medium 405 is, for example, a disk, a semiconductor memory, a USB memory, etc. The recording medium 405 may be removable from the quantum computing device 201.

The housing I/F 406 controls access to the housing 407 under the control of the CPU 401. The housing I/F 406 converts signals output from the CPU 401 into input signals for the housing 407 using a microwave pulse generator and transmits the converted signals to the housing 407. The housing I/F 406 converts the signals output from the housing 407 into input signals for the CPU 401 using a microwave pulse demodulator and transmits the converted signals to the CPU 401.

The housing 407 is a computing device equipped with one or more qubit chips cooled to an extremely low temperature of 10 mK. Each qubit chip represents, for example, a logical qubit. The housing 407 performs a predetermined computation according to an input signal using one or more qubit chips, and outputs an output signal corresponding to the result of performing the predetermined computation.

In addition to the components above, the quantum computing device 201 may have, for example, a keyboard, a mouse, a display, a printer, a scanner, a microphone, a speaker, etc. The quantum computing device 201 may also have the recording medium I/F 404 and recording medium 405 in plural. Further, in the quantum computing device 201, the recording medium I/F 404 and the recording medium 405 may be omitted. Further, the qubit chip in the housing 407 may be controlled by a method other than microwaves. The qubit chip in the housing 407 may implement, for example, optical qubits.

An example of a hardware configuration example of the client device 202 is, for example, similar to the example of the hardware configuration of the information processing device 100 depicted in Fig. 3 and thus, description thereof is omitted.

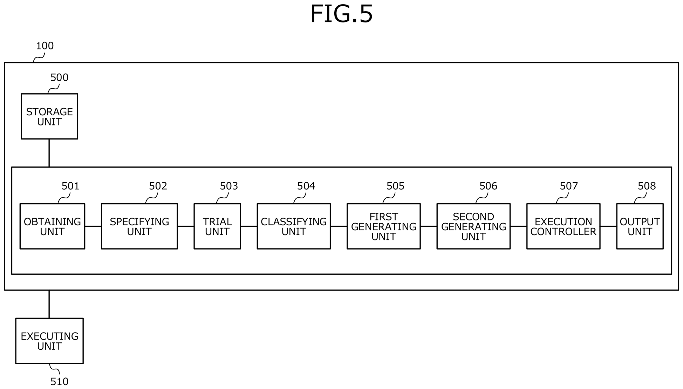

Next, an example of a functional configuration of the information processing device 100 will be described with reference to Fig. 5.

Fig. 5 is a block diagram depicting an example of a functional configuration of the information processing device 100. The information processing device 100 includes a storage unit 500, an obtaining unit 501, a specifying unit 502, a trial unit 503, a classifying unit 504, a first generating unit 505, a second generating unit 506, an execution controller 507, and an output unit 508.

The information processing device 100 may control an executing unit 510. The executing unit 510 has a function of executing a dynamic quantum circuit. The executing unit 510 is provided, for example, inside the information processing device 100. The executing unit 510 is, for example, an actual machine of a quantum computer provided outside the information processing device 100. The actual machine of the quantum computer is, for example, the quantum computing device 201.

The storage unit 500 is implemented by, for example, a storage area such as the memory 302 or the recording medium 305 depicted in Fig. 3. Hereinafter, while a case where the storage unit 500 is included in the information processing device 100 will be described, the present disclosure is not limited hereto. For example, the storage unit 500 may be included in a device different from the information processing device 100, and the storage content of the storage unit 500 may be referable from the information processing device 100.

The obtaining unit 501 to the output unit 508 function as an example of a controller. Specifically, the functions of the obtaining unit 501 to the output unit 508 are implemented, for example, by causing the CPU 301 to execute a program stored in a storage area such as the memory 302 or the recording medium 305 depicted in Fig. 3 or by the network I/F 303. The processing results of the functional units are stored to, for example, a storage area such as the memory 302 or the recording medium 305 depicted in Fig. 3.

The storage unit 500 stores various types of information referred to or updated in the processes by the functional units. The storage unit 500 stores a dynamic quantum circuit. The dynamic quantum circuit has multiple conditional branches. The dynamic quantum circuit represents non-deterministic operations. The dynamic quantum circuit spans multiple logical qubits. The dynamic quantum circuit describes how quantum states represented by logical qubits are manipulated. The dynamic quantum circuit includes, for example, a quantum gate that operates on a logical qubit and manipulates a quantum state represented by the logical qubit. The dynamic quantum circuit defines that the quantum gate applied to the logical qubit is switched according to the determination result of a conditional branch.

A conditional branch corresponds to an if statement, a while statement, or the like. An if statement defines that the quantum gate applied to the logical qubit is switched according to the condition f related to the classical bit. The classical bit stores, for example, a measurement result of any logical qubit. The condition f need not be critical. The condition f may have randomness, for example. The while statement defines controlling whether to repeatedly apply the quantum gate to the logical qubit according to the condition f related to the classical bit.

The quantum gate is, for example, a Hadamard gate acting on one qubit, a rotation gate acting on one qubit, or the like. A rotating gate represents the effect of rotation about, for example, the X, Y, or Z axis. The quantum gate is, for example, an entangling gate that acts on multiple qubits. The entangling gate is, for example, a swap gate or a CNOT gate. The dynamic quantum circuit is obtained by, for example, the obtaining unit 501.

The storage unit 500 stores, for example, real machine information concerning an actual machine of the quantum computer. The actual machine of the quantum computer is, for example, the quantum computing device 201. The real machine information includes, for example, a topology of physical qubits included in the quantum computer. The real machine information is obtained by, for example, the obtaining unit 501. The real machine information may be set in advance by the user, for example.

The storage unit 500 obtains, for example, execution parameters used when the dynamic quantum circuit is executed. The execution parameter includes, for example, the number of shots when the dynamic quantum circuit is executed. The execution parameter is obtained by the obtaining unit 501, for example. The execution parameter may be set in advance by a user, for example.

The obtaining unit 501 obtains various types of information used for processing by the functional units. The obtaining unit 501 stores the obtained various types of information to the storage unit 500 or outputs the obtained various types of information to the functional units. The obtaining unit 501 may output various types of information stored in the storage unit 500 to the functional units. The obtaining unit 501 obtains various types of information based on, for example, an operation input of a user. For example, the obtaining unit 501 may receive various types of information from a device different from the information processing device 100.

The obtaining unit 501 obtains, for example, a processing request requesting execution of a dynamic quantum circuit. The processing request may include, for example, the dynamic quantum circuit. The processing request may include, for example, real machine information. The processing request may include, for example, an execution parameter. Specifically, the obtaining unit 501 obtains the processing request by receiving an input of the processing request based on an operation input of the user. Specifically, the obtaining unit 501 may obtain the processing request by receiving the processing request from another computer. The other computer is, for example, the client device 202.

The obtaining unit 501 obtains, for example, a dynamic quantum circuit. Specifically, the obtaining unit 501 obtains the dynamic quantum circuit by extracting the dynamic quantum circuit from the processing request. Specifically, the obtaining unit 501 may obtain the dynamic quantum circuit by receiving an input of the dynamic quantum circuit based on an operation input of the user. Specifically, the obtaining unit 501 may obtain the dynamic quantum circuit by receiving the dynamic quantum circuit from another computer. The other computer is, for example, the client device 202.

The obtaining unit 501 obtains, for example, real machine information. Specifically, the obtaining unit 501 obtains the real machine information by extracting the real machine information from the processing request. Specifically, the obtaining unit 501 may obtain the real machine information by receiving an input of the real machine information based on an operation input of the user. Specifically, the obtaining unit 501 may obtain the real machine information by receiving the real machine information from another computer. The other computer is, for example, the client device 202.

The obtaining unit 501 obtains, for example, an execution parameter. Specifically, the obtaining unit 501 obtains the execution parameter by extracting the execution parameter from the processing request. Specifically, the obtaining unit 501 may obtain the execution parameter by receiving an input of the execution parameter based on an operation input of the user. Specifically, the obtaining unit 501 may obtain the execution parameter by receiving the execution parameter from another computer. The other computer is, for example, the client device 202.

The obtaining unit 501 may receive a start trigger for starting a process by any of the functional units. The start trigger is, for example, a predetermined operation input by the user. The start trigger may be, for example, reception of predetermined information from another computer. The start trigger may be, for example, output of predetermined information by any of the functional units. For example, the obtaining unit 501 regards obtaining the processing request as a start trigger for starting a process of the specifying unit 502, the trial unit 503, the classifying unit 504, the first generating unit 505, the second generating unit 506, and the execution controller 507.

The specifying unit 502 specifies a first portion that is included in the dynamic quantum circuit and has one or more first conditional branches and a second portion that is downstream to the first portion and has one or more second conditional branches.

For example, the specifying unit 502 specifies the first portion and the second portion by dividing the dynamic quantum circuit into the first portion having the first number of conditional branches as the first conditional branches and the second portion having the second number of conditional branches as the second conditional branches according to a predetermined rule. The first number and the second number are set in advance by the user, for example. Thus, the specifying unit 502 may specify the first portion in which the method of allocating the multiple physical qubits is fixed and the second portion in which the method of allocating the multiple physical qubits is dynamically switched, and may handle the first portion and the second portion separately.

Specifically, the first number may be preferably set to be equal to not more than a predetermined upper limit value. Specifically, the first number may be preferably set to be not less than a predetermined lower limit value. Accordingly, the specifying unit 502 may appropriately control the number of combinations of the determination results that may occur for the first conditional branches in the first portion.

For example, when the first number is set to be not more than the predetermined upper limit value, the specifying unit 502 may make the scale of the second portion for dynamically switching the method of allocating the multiple physical qubits relatively large. In addition, for example, in a case where the first number is set to be not less than the predetermined lower limit value, the specifying unit 502 may diversify combinations of determination results of the first conditional branches in the first portion, and may easily estimate combinations of determination results of the second conditional branches in the second portion with high accuracy.

The trial unit 503 obtains multiple execution paths respectively representing combinations of determination results of the conditional branches in the dynamic quantum circuit, based on results of trial of the dynamic quantum circuit multiple times. For example, when the dynamic quantum circuit has a conditional branch corresponding to an if statement, each of the multiple execution paths includes True or False as a determination result in the if statement. For example, when the dynamic quantum circuit has a conditional branch corresponding to a while statement, each of the multiple execution paths includes a loop count that is a determination result in the while statement.

For example, the trial unit 503 controls the executing unit 510 to try the dynamic quantum circuit multiple times. For example, the trial unit 503 obtains multiple execution paths respectively representing combinations of determination results of conditional branches in the dynamic quantum circuit, based on a result of trial of the dynamic quantum circuit multiple times. Thus, the trial unit 503 may obtain a guideline for determining how to allocate the physical qubits to the dynamic quantum circuit.

The trial unit 503 may include, for example, a quantum simulator. The trial unit 503 tries (executes) the dynamic quantum circuit multiple times using, for example, a quantum simulator. For example, the trial unit 503 obtains multiple execution paths respectively representing combinations of determination results of conditional branches in the dynamic quantum circuit, based on a result of trial of the dynamic quantum circuit multiple times. Thus, the trial unit 503 may obtain a guideline for determining how to allocate multiple physical qubits to the dynamic quantum circuit.

The specifying unit 502 may specify a first portion having one or more first conditional branches and a second portion having one or more second conditional branches, the first and second portions being portions included in the dynamic quantum circuit, after the trial unit 503 has tried the dynamic quantum circuit multiple times. For example, based on the multiple execution paths obtained by the trial unit 503, the specifying unit 502 specifies the first portion and the second portion such that the number of combinations of the determination results that may occur with the first conditional branches in the first portion is not less than the first threshold value or not more than the second threshold value. The first threshold is smaller than the second threshold. The first threshold and the second threshold are set in advance by the user, for example. Accordingly, the specifying unit 502 may appropriately specify the first portion and the second portion according to the tendency of the execution paths.

The classifying unit 504 refers to the multiple execution paths obtained by the trial unit 503 and classifies into multiple groups, the combinations of the determination results of the first conditional branches in the first portion specified by the specifying unit 502. For example, based on the similarity of the combinations of the determination results of the second conditional branches in the second portion specified by the specifying unit 502, the classifying unit 504 classifies into multiple groups, the combinations of the determination results of the first conditional branches in the first portion.

Specifically, based on the similarity of the combinations of the determination results of the second conditional branches in the second portion using a clustering method, the classifying unit 504 classifies into multiple groups, the combinations of the determination results of the first conditional branches in the first portion. As a result, the classifying unit 504 may specify multiple groups as a reference for dynamically switching the method of allocating the multiple physical qubits with respect to the second portion.

The first generating unit 505 generates first information indicating how to allocate the physical qubits to the first portion. The first information represents, for example, a method of allocating the multiple physical qubits at the head of the first portion and a method of allocating the multiple physical qubits in the midst of processing the first portion, by inserting the first swap gate into the first portion.

For example, the first generating unit 505 generates the first information so that the number of times of inserting the first swap gate into the first portion is reduced. As a result, the first generating unit 505 may determine how to allocate the physical qubits with respect to the first portion. Therefore, the first generating unit 505 may make the first portion executable and may start execution of the dynamic quantum circuit.

The second generating unit 506 generates, based on a combination of determination results of the second conditional branches in the second portion corresponding to each group classified by the classifying unit 504, second information indicating a method of allocating multiple physical qubits to the second portion, the second generating unit 506 associating the second information with each group. The second information represents, for example, a method of allocating the multiple physical qubits at the head of the second portion and a method of allocating the multiple physical qubits in the midst of processing the second portion, by inserting the second swap gate into the second portion.

For example, based on the combination of the determination results of the second conditional branches in the second portion corresponding to each group, the second generator 506 generates the second information so that the number of times of inserting the second swap gate into the second portion is reduced, the second generator 506 associating the second information with each group. Accordingly, the second generating unit 506 may determine and associate with each group, the method of allocating the multiple physical qubits to the second portion. Therefore, the second generating unit 506 may make the second portion executable, and may make the dynamic quantum circuit executable.

For example, according to the combination of the determination results of the first conditional branches, the second generating unit 506 may estimate the combination of the determination results of the second conditional branches before executing the second portion, and make it possible to select appropriate second information. Therefore, for example, the second generating unit 506 may dynamically switch the method of allocating the multiple physical qubits with respect to the second portion. Therefore, the second generating unit 506 may prevent an increase in the scale and depth of the dynamic quantum circuit, may suppress the occurrence of errors in the quantum state, and may improve the reliability of the dynamic quantum circuit.

The execution controller 507 controls the executing unit 510 to execute the dynamic quantum circuit based on the generated first information and the generated second information. For example, the execution controller 507 controls the executing unit 510 to allocate the physical qubits to the first portion according to the first information and execute the first portion. For example, after executing the first portion, the execution controller 507 controls the executing unit 510 to: allocate the physical qubits to the second portion according to the second information generated and associated with the group to which the current combination of the determination results of the first conditional branch belongs, and execute the second portion.

Specifically, the execution controller 507 passes the first information and the second information together with the dynamic quantum circuit to the executing unit 510, thereby controlling the executing unit 510 to sequentially execute the first portion and the second portion as described above. Specifically, the execution controller 507 may control the executing unit 510 to execute the first portion by passing the first information and the dynamic quantum circuit to the executing unit 510, and then control the executing unit 510 to execute the second portion by passing the second information to the executing unit 510.

Accordingly, the execution controller 507 may appropriately allocate physical qubits to the dynamic quantum circuit and execute the dynamic quantum circuit. The execution controller 507 may allocate physical qubits to the second portion within the coherence time and may appropriately execute the dynamic quantum circuit.

The execution controller 507 obtains the result of executing the dynamic quantum circuit from the executing unit 510. For example, as a result of executing the dynamic quantum circuit, the execution controller 507 obtains, from the executing unit 510, a result of measuring each logical qubit of the logical qubits forming the dynamic quantum circuit. Thus, the execution controller 507 may obtain the result of executing the dynamic quantum circuit in a usable manner.

The output unit 508 outputs a processing result of at least one of the functional units. The output format is, for example, display on a display, print output to a printer, transmission to an external device by the network I/F 303, or storage to a storage area such as the memory 302 or the recording medium 305. Accordingly, the output unit 508 may notify the user of the processing result of at least one of the functional units, and the convenience of the information processing device 100 may be improved.

The output unit 508 outputs, for example, the dynamic quantum circuit, the first information generated by the first generating unit 505, and the second information generated by the second generating unit 506 in association with each other. Specifically, the output unit 508 outputs the dynamic quantum circuit, the first information generated by the first generating unit 505, and the second information generated by the second generating unit 506 in association with each other so that the user may refer thereto. Specifically, the output unit 508 may transmit the dynamic quantum circuit, the first information generated by the first generating unit 505, and the second information generated by the second generating unit 506 to another computer in association with each other. The other computer is, for example, the client device 202. Thus, the output unit 508 may make the dynamic quantum circuit, the first information generated by the first generating unit 505, and the second information generated by the second generating unit 506 available externally. The output 508 may suitably enable the dynamic quantum circuit to run externally.

The output unit 508 outputs, for example, a result of executing the dynamic quantum circuit obtained by the execution controller 507. Specifically, the output unit 508 outputs the result of executing the dynamic quantum circuit so that the user may refer to the result. Specifically, the output unit 508 may transmit the result of executing the dynamic quantum circuit to another computer. The other computer is, for example, the client device 202. Thus, the output unit 508 may make the result of executing the dynamic quantum circuit available externally.

Here, while a case where the specifying unit 502 specifies two portions included in the dynamic quantum circuit, that is, the first portion having one or more first conditional branches and the second portion having one or more second conditional branches is described, the present disclosure is not limited hereto. For example, the specifying unit 502 may specify three or more portions that are included in the dynamic quantum circuit, each portion having one or more conditional branches. In this case, the trial unit 503 obtains multiple execution paths respectively representing combinations of determination results of conditional branches in the dynamic quantum circuit based on results of executing the dynamic quantum circuit multiple times.

The classifying unit 504 refers to the obtained execution paths, and with respect to each portion other than the head portion among the specified three or more portions, classifies into multiple groups, combinations of determination results of conditional branches in one or more portions upstream to the portion. For example, for each portion other than the head portion, the classifying unit 504 classifies into multiple groups, combinations of determination results of conditional branches in one or more portions upstream to the portion, based on similarity of determination results of conditional branches in the portion. The one or more portions are, for example, all portions that precede the portion. The one or more portions may be, for example, a portion immediately upstream to the portion.

The first generating unit 505 generates the first information indicating a method of allocating multiple physical qubits to the head portion. The second generating unit 506 generates the second information indicating a method of allocating multiple physical qubits to each portion other than the head portion among the specified three or more portions, the second generating unit 506 associating the second information with each classified group. For example, the second generating unit 506 generates and associates with each group, the second information based on a combination of determination results of conditional branches in each portion other than the head portion, the combination being among combinations corresponding to the groups.

The execution controller 507 allocates the physical qubits to the head portion according to the generated first information and controls the executing unit to execute the head portion. The execution controller 507 controls the executing unit to sequentially execute the respective portions excluding the head portion, after executing the head portion. When sequentially executing the respective portions, the execution controller 507 identifies the second information generated and associated with the group to which the current combination of the determination results of the conditional branches in one or more portions upstream to the portion belongs. When sequentially executing the respective portions, the execution controller 507 allocates multiple physical qubits to the portions according to the specified second information.

As a result, the information processing device 100 may dynamically allocate multiple physical qubits to each portion other than the head portion among three or more portions included in the dynamic quantum circuit, each of the portions having one or more conditional branches. The information processing device 100 may improve the reliability of the dynamic quantum circuit.

Here, while a case where the information processing device 100 includes the obtaining unit 501, the specifying unit 502, the trial unit 503, the classifying unit 504, the first generating unit 505, the second generating unit 506, the execution controller 507, and the output unit 508 is described, the present disclosure is not limited hereto. For example, the information processing device 100 may omit any of the functional units. Specifically, the information processing device 100 may omit the execution controller 507. In this case, the information processing device 100 may be able to communicate with another computer that has the execution controller 507.

Next, a first operation example of the information processing device 100 will be described with reference to Figs. 6 to 16.

Figs. 6, 7, 8, 9, 10, 11, 12, 13, 14, 15, and 16 are explanatory diagrams depicting the first operation example of the information processing device 100. In Fig. 6, the information processing device 100 obtains the dynamic quantum circuit 600 related to the logical qubits q₀, q₁, q₂, and q₃ and the classical bit c. The classical bit c stores a result obtained by measuring one of the logical qubits q₀, q₁, q₂, and q₃.

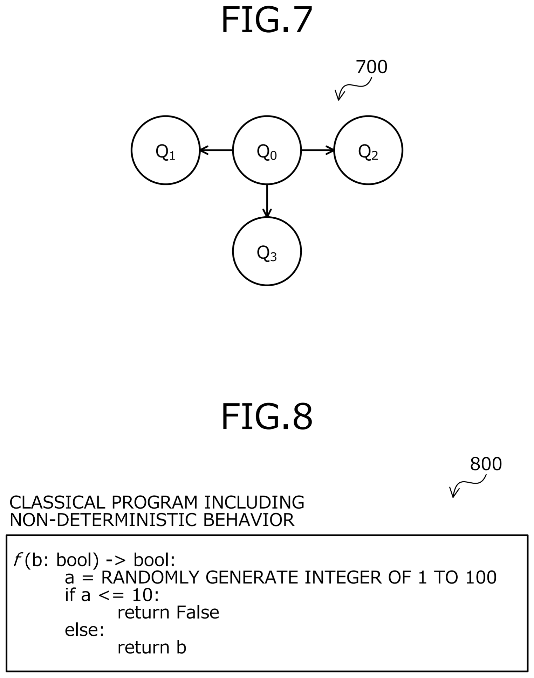

The dynamic quantum circuit 600 includes quantum gates 601-608. The dynamic quantum circuit 600 has a conditional branch 610 corresponding to an if statement. The conditional branch 610 changes the quantum gate applied to the logical qubit according to the determination result of the function f using the result c₀ measured by the quantum gate 608 and stored in the classical bit c as an argument. The function f will be described later with reference to Fig. 8, for example. The conditional branch 610 includes quantum gates 611 and 612 to be applied to the logical qubit when the determination result of the function f is True. The conditional branch 610 includes a quantum gate 613 to be applied to the logical qubit when the determination result of the function f is False.

The dynamic quantum circuit 600 includes quantum gates 621-625. The dynamic quantum circuit 600 has a conditional branch 630 corresponding to an if statement. The conditional branch 630 changes the quantum gate applied to the logical qubit according to the determination result of the function f using the result c₁ measured by the quantum gate 625 as an argument, which is stored in the classical bit c. The conditional branch 630 includes quantum gates 631 to 633 to be applied to the logical qubit when the determination result of the function f is True. The conditional branch 630 includes quantum gates 634 and 635 to be applied to the logical qubit when the determination result of the function f is False.

The dynamic quantum circuit 600 includes a quantum gate 641. The dynamic quantum circuit 600 has a conditional branch 650 corresponding to an if statement. The conditional branch 650 changes the quantum gate applied to the logical qubit according to the determination result of the function f using the result c₂ measured by the quantum gate 641 and stored in the classical bit c as an argument. The conditional branch 650 includes quantum gates 651 and 652 to be applied to the logical qubit when the determination result of the function f is True. The conditional branch 650 includes a quantum gate 653 applied to the logical qubit when the determination result of the function f is False. Next, Fig. 7 will be described.

In Fig. 7, the information processing device 100 obtains real machine information related to the quantum computing device 201. The real machine information includes, for example, a topology 700 of the physical qubits Q₀, Q₁, Q₂, and Q₃ included in the quantum computing device 201. The topology 700 is a directed graph representing the orientation of two-quantum gates acting on two logical qubits.

In the example depicted in Fig. 7, there is a constraint that a two-quantum gate needs to be realized so as to control any one of the physical qubits Q₁, Q₂, and Q₃ according to the physical qubit Q0. Specifically, the two-quantum gate cannot be realized so as to control the physical qubit Q₂ according to the physical qubit Q₁. Therefore, when the dynamic quantum circuit 600 is executed, the logical qubits q₀, q₁, q₂, and q₃ and the physical qubits Q₁, Q₂, and Q₃ may need to be reallocated by the swap gate. Next, the function f used for the conditional branches 610,630, and 650 will be described with reference to Fig. 8.

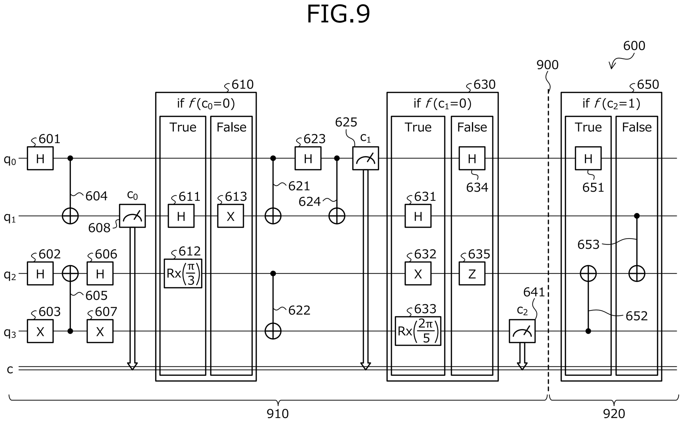

In Fig. 8, a program 800 of the function f is depicted. The function f has a Boolean argument b. The function f randomly generates an integer of 1 to 100 and assigns the integer to a variable a. The function f returns False when the variable a≤10. The function f returns the argument b when the variable a>10. Next, Fig. 9 will be described.

In Fig. 9, the information processing device 100 divides the dynamic quantum circuit 600 into an initial portion 910 and a latter portion 920. The information processing device 100 divides the dynamic quantum circuit 600 into the initial portion 910 and the latter portion 920 so that a partial circuit having the two conditional branches 610 and 630 from the head of the dynamic quantum circuit 600 is set as the initial portion 910 based on an operation input of a user. The initial portion 910 is a range from the head to a dotted line 900.

The latter portion 920 is a range from the dotted line 900 to the end.

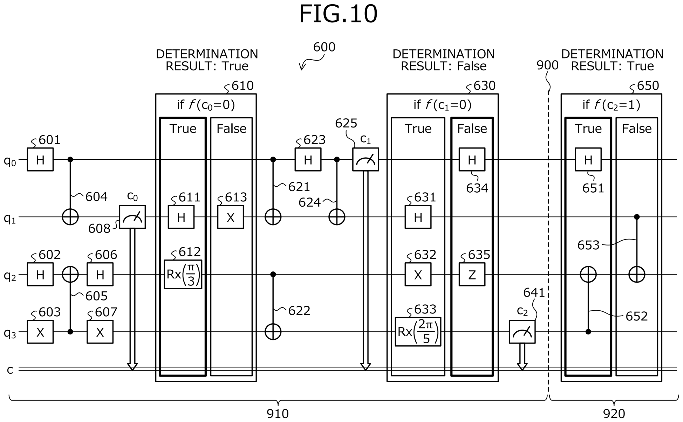

As a result, the information processing device 100 may divide the dynamic quantum circuit 600 into the initial portion 910 in which the method of allocating the physical qubits Q₀, Q₁, Q₂, and Q₃ is fixed and the latter portion 920 in which the method of allocating the physical qubits Q₀, Q₁, Q₂, and Q₃ is dynamically switched. Next, Fig. 10 will be described.

In Fig. 10, the information processing device 100 compiles the dynamic quantum circuit 600 and controls the quantum computing device 201 to try the dynamic quantum circuit 600 multiple times. The information processing device 100 obtains, from the quantum computing device 201, multiple execution paths respectively representing combinations of determination results of the conditional branches 610, 630, and 650 when the dynamic quantum circuit 600 is tried.

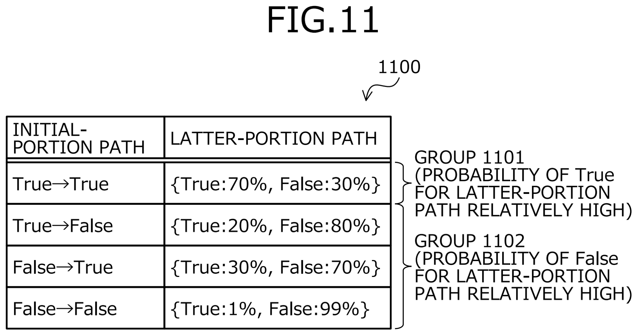

The execution path represents, for example, a combination of determination results of the conditional branches 610, 630, and 650. The determination result is, for example, True or False. In the example depicted in Fig. 10, specifically, the information processing device 100 obtains an execution path representing a combination "True→False→True" of the determination results of the conditional branches 610, 630, and 650. Next, Fig. 11 will be described.

In Fig. 11, the information processing device 100 analyzes the obtained execution paths, and generates correspondence information indicating a correspondence relationship between a combination of determination results of the conditional branches 610 and 630 in the initial portion 910 and a combination of determination results of the conditional branch 650 in the latter portion 920.

In the example depicted in Fig. 11, specifically, the information processing device 100 generates multiple initial-portion paths respectively representing combinations of determination results of the conditional branches 610 and 630 in the initial portion 910, based on the obtained execution paths. The initial-portion path represents, for example, one of "True→True", "True→False", "False→True", and "False→False", which are combinations of the determination results of the conditional branches 610 and 630.

Specifically, the information processing device 100 generates, based on the obtained execution paths, a latter-portion path representing the probability of the combination of the determination results of the conditional branches 650 in the latter portion 920, generated latter-portion paths respectively corresponding to the initial-portion paths. The latter-portion path represents, for example, a probability "True: 70%, False: 30%" of a combination of determination results of the conditional branch 650. Specifically, as depicted in a table 1100, the information processing device 100 generates correspondence information indicating a correspondence relationship between each initial-portion path and a latter-portion path corresponding to the initial-portion path.

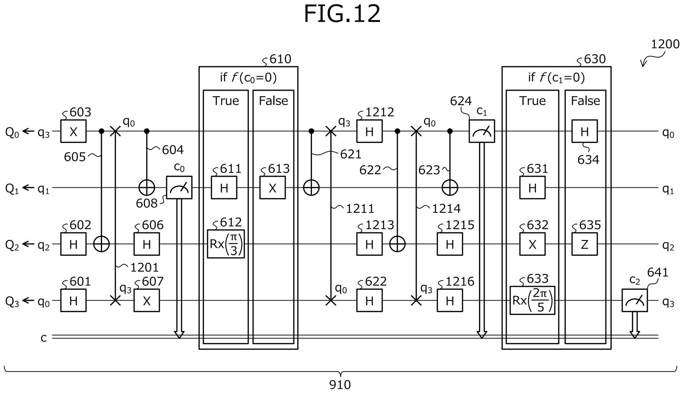

Thereafter, the information processing device 100 classifies the initial-portion paths into multiple groups based on the similarity of the latter-portion paths. For example, the information processing device 100 classifies one or more initial-portion paths in which the probability of True of the latter-portion path is not less than the probability of False into the same group 1101. For example, the information processing device 100 classifies one or more initial-portion paths in which the probability of True of the latter-portion path is less than the probability of False into the same group 1102. Next, Fig. 12 will be described.

In Fig. 12, the information processing device 100 refers to the real machine information and determines the method of allocating the logical qubits q₀, q₁, q₂, and q₃ and the physical qubits Q₀, Q₁, Q₂, and Q₃ to the initial portion 910 of the dynamic quantum circuit 600. For example, the information processing device 100 decides the allocation method such that the number of quantum gates applied to the logical qubits in the initial portion 910 is reduced on average based on the multiple initial-portion paths.

Specifically, the information processing device 100 determines the allocation method such that the number of quantum gates applied to the logical qubits is reduced on average when the combination of the determination results of the conditional branches 610 and 630 occurs in the initial portion 910. The information processing device 100 generates a partial quantum circuit 1200 representing a result of inserting a quantum gate, such as a swap gate,, into the initial portion 910 according to the determined allocation method.

In the example depicted in Fig. 12, specifically, the information processing device 100 decides to allocate the logical qubits q₀, q₁, q₂, and q₃ to the physical qubits Q₃, Q₁, Q₂, and Q₀, sequentially, at the head of the initial portion 910. Specifically, the information processing device 100 inserts the quantum gates 1201 and 1211 to 1216, thereby determining reallocation of the logical qubits q₀, q₁, q₂, and q₃ and the physical qubits Q₀, Q₁, Q₂, and Q₃ in the midst of processing the initial portion 910.

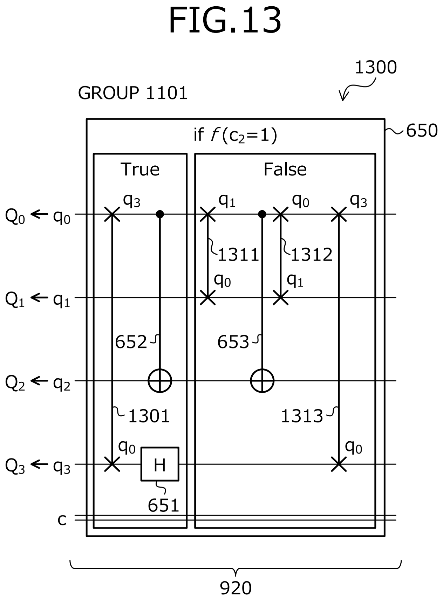

Specifically, the information processing device 100 generates the partial quantum circuit 1200 representing a result of inserting the quantum gates 1201 and 1211 to 1216 into the initial portion 910 according to the method of allocating the logical qubits q₀, q₁, q₂, and q₃ and the physical qubits Q₀, Q₁, Q₂, and Q₃. Next, Fig. 13 will be described.

In Fig. 13, the information processing device 100 refers to and associates with the group 1101, the real machine information and determines the method of allocating the logical qubits q₀, q₁, q₂, and q₃ and the physical qubits Q₀, Q₁, Q₂, and Q₃ to the latter portion 920 of the dynamic quantum circuit 600. For example, based on the one or more latter-portion paths corresponding to the group 1101, the information processing device 100 decides the allocation method such that the number of quantum gates applied to the logical qubits in the latter portion 920 probabilistically decreases.

Specifically, since the probability that the determination result of the conditional branch 650 is True tends to be relatively high in the latter portion 920, the information processing device 100 determines the allocation method such that the number of quantum gates applied to the logical qubit is reduced in the case of True. The information processing device 100 generates a partial quantum circuit 1300 representing a result of inserting a quantum gate, such as a swap gate,, into the latter portion 920 according to the determined allocation method.

In the example depicted in Fig. 13, specifically, the information processing device 100 decides to allocate the logical qubits q₀, q₁, q₂, and q₃ to the physical qubits Q₀, Q₁, Q₂, and Q₃, sequentially, at the head of the latter portion 920. Specifically, the information processing device 100 inserts the quantum gates 1301 and 1311 to 1313, thereby determining reallocation of the logical qubits q₀, q₁, q₂, and q₃ and the physical qubits Q₀, Q₁, Q₂, and Q₃ in the midst of processing the latter portion 920.

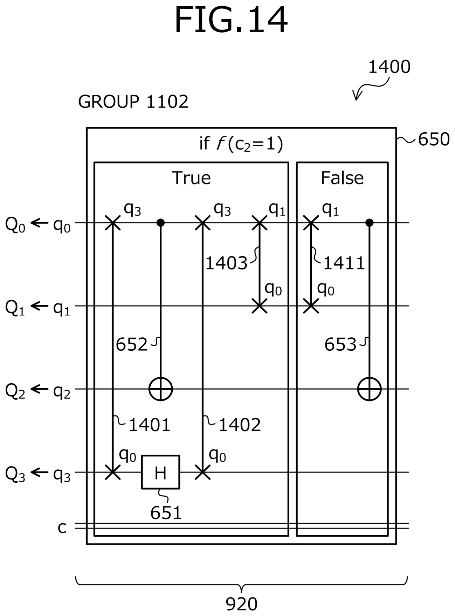

Specifically, the information processing device 100 generates the partial quantum circuit 1300 representing a result of inserting the quantum gates 1301 and 1311 to 1313 into the latter portion 920 according to the method of allocating the logical qubits q₀, q₁, q₂, and _{q3} and the physical qubits Q₀, Q₁, Q₂, and Q₃. Next, Fig. 14 will be described.

In Fig. 14, the information processing device 100 refers to and associates with the group 1102, the real machine information and determines the method of allocating the logical qubits q₀, q₁, q₂, and q₃ and the physical qubits _{Q0}, Q₁, Q₂, and Q₃ to the latter portion 920 of the dynamic quantum circuit 600. For example, based on the one or more latter-portion paths corresponding to the group 1102, the information processing device 100 decides the allocation method such that the number of quantum gates applied to the logical qubits in the latter portion 920 decreases probabilistically.

Specifically, since the probability that the determination result of the conditional branch 650 is False tends to be relatively high in the latter portion 920, the information processing device 100 determines the allocation method such that the number of quantum gates applied to the logical qubit is reduced in the case of False. The information processing device 100 generates a partial quantum circuit 1400 representing a result of inserting a quantum gate, such as a swap gate,, into the latter portion 920 according to the determined allocation method.

In the example depicted in Fig. 14, specifically, the information processing device 100 decides to allocate the logical qubits q₀, q₁, q₂, and q₃ to the physical qubits Q₀, Q₁, Q₂, and Q₃, sequentially, at the head of the latter portion 920. Specifically, the information processing device 100 inserts the quantum gates 1401 to 1403 and 1411, thereby determining reallocation of the logical qubits q₀, q₁, q₂, and q₃ and the physical qubits Q₀, Q₁, Q₂, and Q₃ in the midst of processing the latter portion 920.

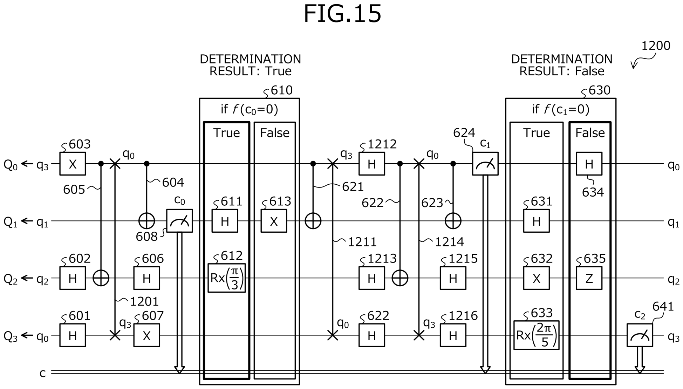

Specifically, the information processing device 100 generates the partial quantum circuit 1400 representing a result of inserting the quantum gates 1401 to 1403 and 1411 into the latter portion 920 according to the method of allocating the logical qubits q₀, q₁, q₂, and _{q3} and the physical qubits Q₀, Q₁, Q₂, and Q₃. Next, Fig. 15 will be described.

In Fig. 15, the information processing device 100 identifies the current initial-portion path by executing the generated partial quantum circuit 1200 corresponding to the initial portion 910 of the dynamic quantum circuit 600 using the quantum computing device 201. In the example depicted in Fig. 15, the current initial-portion path represents "True→False" which is a combination of the determination results of the conditional branches 610 and 630.

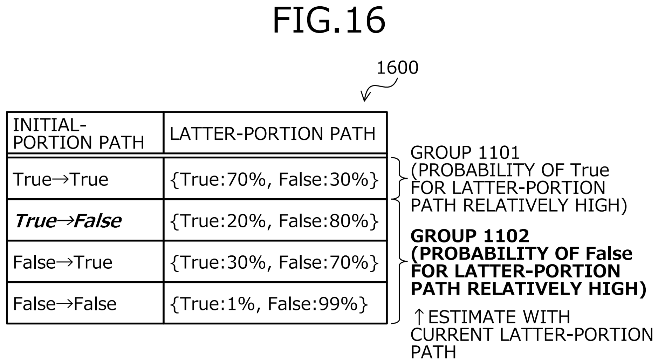

Thus, the information processing device 100 may start execution of the dynamic quantum circuit 600. The information processing device 100 may obtain a criterion for estimating which of the generated partial quantum circuit 1300 and the generated partial quantum circuit 1400 corresponding to the latter portion 920 of the dynamic quantum circuit 600 is preferably executed. Next, Fig. 16 will be described.

In Fig. 16, the information processing device 100 identifies that "True→False", which is the combination of the determination results of the conditional branches 610 and 630 indicated by the current initial-portion path, belongs to the group 1102, as depicted in a table 1600. Thus, the information processing device 100 may estimate that it is preferable to execute the partial quantum circuit 1400 generated and associated with the group 1102, which corresponds to the latter portion 920 of the dynamic quantum circuit 600.

The information processing device 100 uses the quantum computing device 201 to execute the partial quantum circuit 1400 generated and associated with the group 1102, which corresponds to the latter portion 920 of the dynamic quantum circuit 600, thereby obtaining the result of executing the dynamic quantum circuit 600. The results of executing the dynamic quantum circuit 600 include, for example, the results of measuring logical qubits at the end of the dynamic quantum circuit 600. Thus, the information processing device 100 may complete the execution of the dynamic quantum circuit 600.

For example, the information processing device 100 may appropriately allocate the physical qubits Q₀, Q₁, Q₂, and Q₃ to the dynamic quantum circuit 600 and execute the dynamic quantum circuit 600. Specifically, the information processing device 100 may easily switch the method of allocating the physical qubits Q₀, Q₁, Q₂, and Q₃ to the latter portion 920 within the coherence time.

For example, even when a quantum gate, such as a swap gate,, is inserted into the dynamic quantum circuit 600, the information processing device 100 may suppress increases in the scale and depth of the dynamic quantum circuit 600. Therefore, the information processing device 100 may reduce the processing load and the processing time necessary for executing the dynamic quantum circuit 600, for example. For example, the information processing device 100 may reduce the probability of occurrence of an error in the quantum state and improve the reliability of the entire dynamic quantum circuit 600.

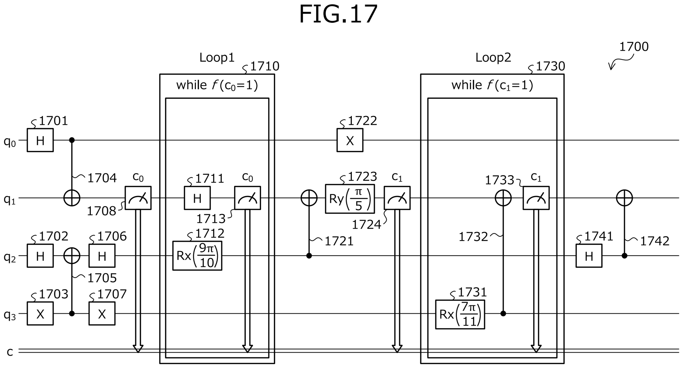

Next, a second operation example of the information processing device 100 will be described with reference to Figs. 17 to 25.

Figs. 17, 18, 18, 20, 21, 22, 23, 24, and 25 are explanatory diagrams depicting a second operation example of the information processing device 100. In Fig. 17, the information processing device 100 obtains a dynamic quantum circuit 1700 related to the logical qubits q₀, q₁, q₂, and q₃ and the classical bit c. The classical bit c stores a result obtained by measuring one of the logical qubits q₀, q₁, q₂, and q₃.

A dynamic quantum circuit 1700 includes quantum gates 1701-1708. The dynamic quantum circuit 1700 has a conditional branch 1710 corresponding to a while statement. The conditional branch 1710 controls the number of times the quantum gate is applied to the logical qubit according to the determination result of the function f using the result c₀ measured by the quantum gate 1708 and stored in the classical bit c as an argument. The function f follows, for example, the program 800 depicted in Fig. 8. A conditional branch 1710 includes quantum gates 1711-1713 that are iteratively applied to logical qubits while the decision of function f is True. The conditional branch 1710 stops applying the quantum gates 1711 to 1713 to the logical qubits when the determination result of the function f is False.

The dynamic quantum circuit 1700 includes quantum gates 1721-1724. The dynamic quantum circuit 1700 has a conditional branch 1730 corresponding to a while statement. The conditional branch 1730 controls the number of times the quantum gate is applied to the logical qubit according to the determination result of the function f using the result c₁ measured by the quantum gate 1724 and stored in the classical bit c as an argument. The conditional branch 1730 includes quantum gates 1731 to 1733 that are repeatedly applied to logical qubits while the determination result of the function f is True. The conditional branch 1730 stops applying the quantum gates 1731 to 1733 to the logical qubits when the determination result of the function f is False.

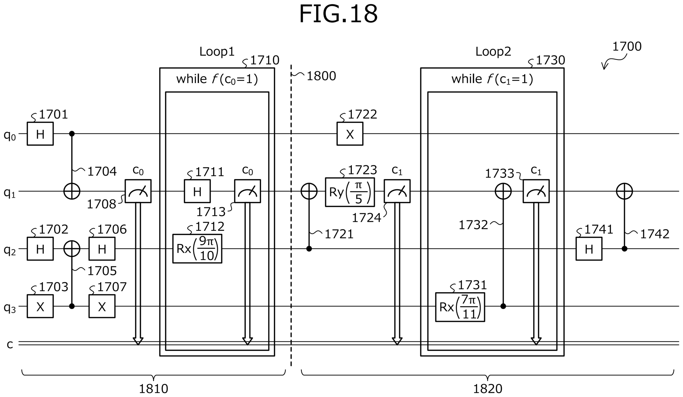

The dynamic quantum circuit 1700 includes quantum gates 1741 and 1742. In addition, the information processing device 100 obtains real machine information related to the quantum computing device 201 as in Fig. 7. The real machine information includes, for example, the topology 700 of the physical qubits Q₀, Q₁, Q₂, and Q₃ included in the quantum computing device 201. The topology 700 is a directed graph representing the orientation of two-quantum gates acting on two logical qubits. Next, Fig. 18 will be described.

In Fig. 18, the information processing device 100 divides the dynamic quantum circuit 1700 into an initial portion 1810 and a latter portion 1820. The information processing device 100 divides the dynamic quantum circuit 1700 into an initial portion 1810 and a latter portion 1820 so that a partial circuit having one conditional branch 1710 from the head of the dynamic quantum circuit 1700 is set as the initial portion 1810 based on the operation input of the user. The initial portion 1810 is a range from the head to a dotted line 1800. The latter portion 1820 is a range from the dotted line 1800 to the end.

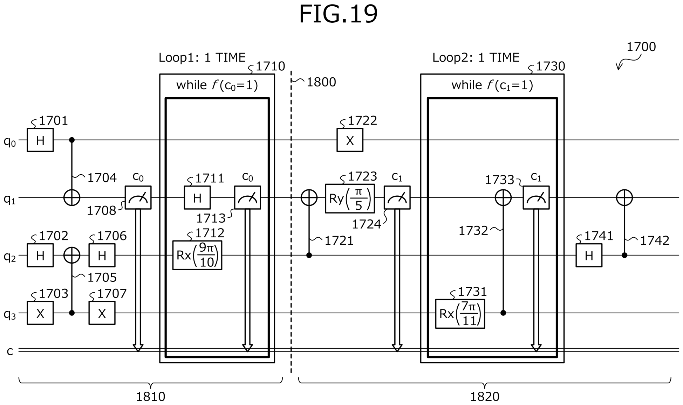

As a result, the information processing device 100 may divide the dynamic quantum circuit 1700 into the initial portion 1810 in which the method of allocating the physical qubits Q₀, Q₁, Q₂, and Q₃ is fixed and a latter portion 1820 in which the method of allocating the physical qubits Q₀, Q₁, Q₂, and Q₃ is switched. Next, Fig. 19 will be described.

In Fig. 19, the information processing device 100 compiles the dynamic quantum circuit 1700 and controls the quantum computing device 201 to try the dynamic quantum circuit 1700 multiple times. The information processing device 100 obtains, from the quantum computing device 201, multiple execution paths each representing a combination of determination results of the conditional branches 1710 and 1730 when the dynamic quantum circuit 1700 is tried.

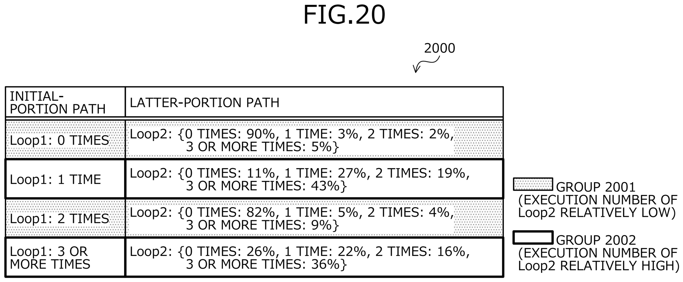

The execution paths represent, for example, combinations of determination results of the conditional branches 1710 and 1730. A determination result is, for example, the number of loops. In the example depicted in Fig. 19, specifically, the information processing device 100 obtains an execution path or the like representing a combination of determination results of the conditional branches 1710 and 1730 "Loop 1: one time→Loop 2: one time". Loop 1 represents the conditional branch 1710. Loop 2 represents the conditional branch 1730. Next, Fig. 20 will be described.

In Fig. 20, the information processing device 100 analyzes the obtained execution paths and generates correspondence information indicating a correspondence relationship between a combination of determination results of a conditional branch 1710 in the initial portion 1810 and a combination of determination results of the conditional branch 1730 in the latter portion 1820.

In the example depicted in Fig. 20, specifically, the information processing device 100 generates multiple initial-portion paths respectively representing combinations of determination results of the conditional branches 1710 in the initial portion 1810 based on the obtained plurality of execution paths. The initial-portion path represents, for example, "Loop 1: 0 times", "Loop 1: 1 time", "Loop 1: 2 times", and "Loop 1: 3 times or more", which are combinations of the determination results of the conditional branch 1710.

Specifically, the information processing device 100 generates, based on the obtained execution paths, a latter-portion path representing a probability of a combination of determination results of the conditional branch 1730 in the latter portion 1820, generated latter-portion paths respectively corresponding to the initial-portion paths. The latter-portion path represents, for example, a probability "Loop 2: {0 times: 90%, 1 time: 3%, 2 times: 2%, 3 times or more: 5%}" of a combination of determination results of the conditional branch 1730. Specifically, as depicted in a table 2000, the information processing device 100 generates correspondence information indicating a correspondence relationship between each initial-portion path and a latter-portion path corresponding to the initial-portion path.

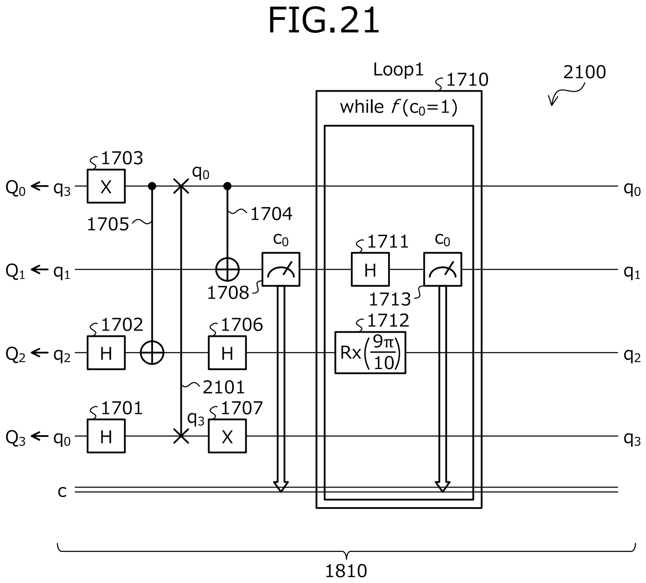

Thereafter, the information processing device 100 classifies the initial-portion paths into multiple groups based on the similarity of the latter-portion paths. For example, the information processing device 100 classifies into a same group 2001, one or more initial-portion paths for which Loop 2 of the latter-portion path corresponding thereto has a total probability of less than 50% for two or more executions of Loop 2 and the number of executions of Loop 2 is relatively small. In addition, for example, the information processing device 100 classifies into a same group 2002, one or more initial-portion paths for which Loop 2 of the latter-portion path corresponding thereto has a total probability of 50% or more for two or more executions of Loop 2 and the number of executions of Loop 2 is relatively large. Next, Fig. 21 will be described.

In Fig. 21, the information processing device 100 refers to the real machine information and determines the method of allocating the logical qubits q₀, q₁, q₂, and q₃ and the physical qubits Q₀, Q₁, Q₂, and Q₃ to the initial portion 1810 of the dynamic quantum circuit 1700. For example, based on the initial-portion paths, the information processing device 100 decides the allocation method such that the number of quantum gates applied to the logical qubits in the initial portion 1810 is reduced on average.

Specifically, in a case where each combination of the determination results of the conditional branch 1710 occurs in the initial portion 1810, the information processing device 100 decides the allocation method so that the number of quantum gates applied to the logical qubit is reduced on average. The information processing device 100 generates a partial quantum circuit 2100 representing a result of inserting a quantum gate, such as a swap gate,, into the initial portion 1810 according to the determined allocation method.

In the example depicted in Fig. 21, specifically, the information processing device 100 decides to allocate the logical qubits q₀, q₁, q₂, and q₃ to the physical qubits Q₃, Q₁, Q₂, and Q₀, sequentially, at the head of the initial portion 1810. Specifically, the information processing device 100 determines to reallocate the logical qubits q₀, q₁, q₂, and q₃ and the physical qubits Q₀, Q₁, Q₂, and Q₃ in the midst of processing the initial portion 1810, by inserting the quantum gate 2101.

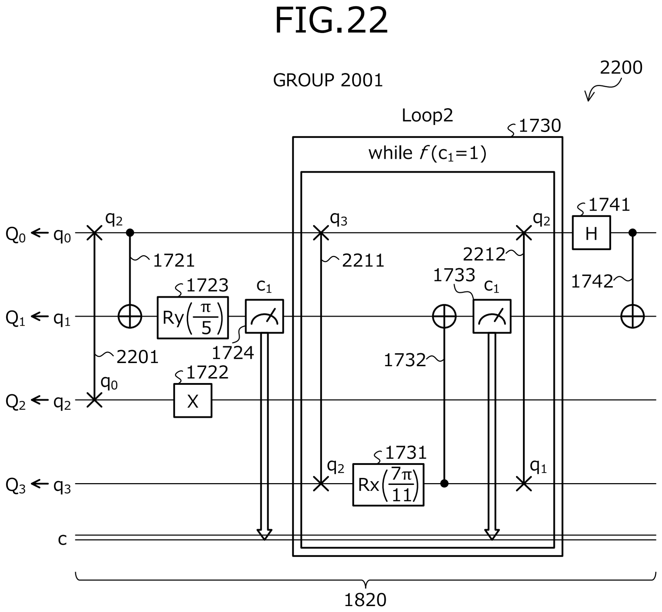

Specifically, the information processing device 100 generates the partial quantum circuit 2100 representing a result of inserting the quantum gate 2101 into the initial portion 1810 according to the method of allocating the logical qubits q₀, q₁, q₂, and q₃ and the physical qubits Q₀, Q₁, Q₂, and Q₃. Next, Fig. 22 will be described.

In Fig. 22, the information processing device 100 refers to and associates with the group 2001, the real machine information and determines the method of allocating the logical qubits q₀, q₁, q₂, and q₃ and the physical qubits Q₀, Q₁, Q₂, and Q₃ to the latter portion 1820 of the dynamic quantum circuit 1700. For example, based on the one or more latter-portion paths corresponding to the group 2001, the information processing device 100 decides the allocation method such that the number of quantum gates applied to the logical qubits in the latter portion 1820 decreases probabilistically.

Specifically, since the number of executions of Loop 2 tends to be relatively small in the latter portion 1820, the information processing device 100 determines the allocation method such that the number of quantum gates applied to the logical qubits is small when the number of executions of Loop 2 is relatively small. The information processing device 100 generates a partial quantum circuit 2200 representing a result of inserting a quantum gate, such as a swap gate, into the latter portion 1820 according to the determined allocation method.

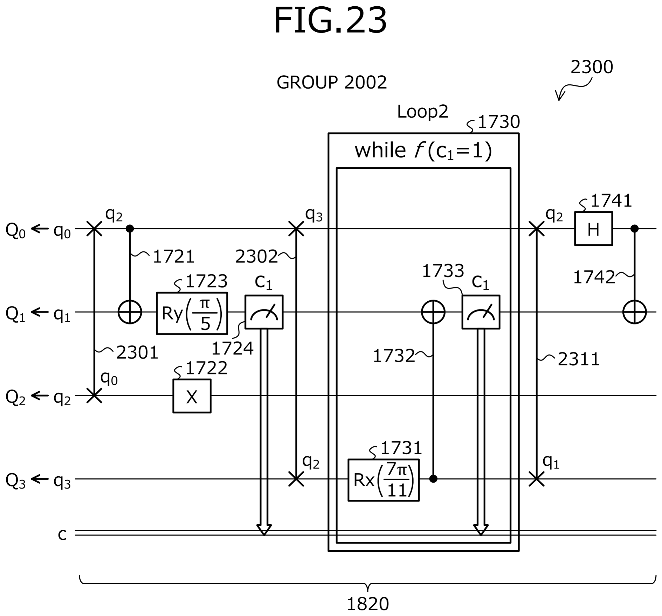

In the example depicted in Fig. 22, specifically, the information processing device 100 decides to allocate the logical qubits q₀, q₁, q₂, and q₃ to the physical qubits Q₀, Q₁, Q₂, and Q₃, sequentially, at the head of the latter portion 1820. Specifically, the information processing device 100 inserts the quantum gates 2201, 2211, and 2212, thereby determining reallocation of the logical qubits q₀, q₁, q₂, and q₃ and the physical qubits Q₀, Q₁, Q₂, and Q₃ in the midst of processing the latter portion 1820. Specifically, the information processing device 100 generates a partial quantum circuit 2200 representing a result of inserting the quantum gates 2201, 2211, and 2212 into the latter portion 1820 according to the determined allocation method. Next, Fig. 23 will be described.

In Fig. 23, the information processing device 100 refers to and associates with the group 2002, the real machine information and determines the method of allocating the logical qubits q₀, q₁, q₂, and q₃ and the physical qubits Q₀, Q₁, Q₂, and Q₃ to the latter portion 1820 of the dynamic quantum circuit 1700. For example, based on the one or more latter-portion paths corresponding to the group 2002, the information processing device 100 decides the allocation method such that the number of quantum gates applied to the logical qubits in the latter portion 1820 decreases probabilistically.

Specifically, since the number of executions of Loop 2 tends to be relatively large in the latter portion 1820, the information processing device 100 determines the allocation method such that the number of quantum gates applied to the logical qubits is reduced when the number of executions of Loop 2 is relatively large. The information processing device 100 generates a partial quantum circuit 2300 representing a result of inserting a quantum gate, such as a swap gate, into the latter portion 1820 according to the determined allocation method.

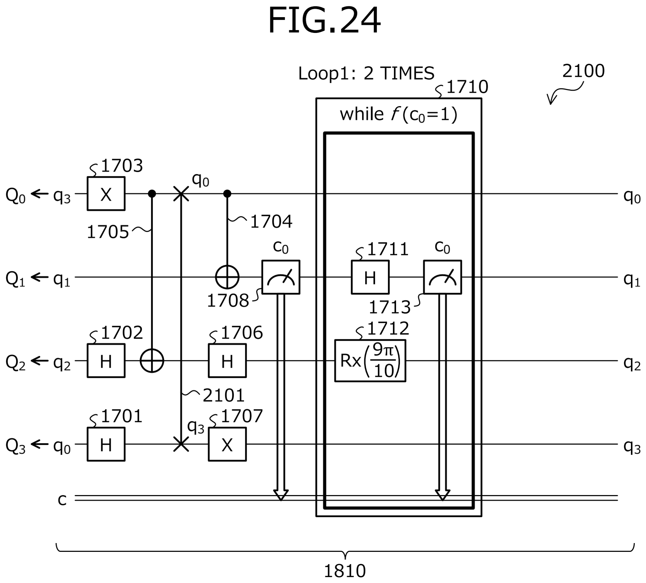

In the example depicted in Fig. 23, specifically, the information processing device 100 decides to allocate the logical qubits q₀, q₁, q₂, and q₃ to the physical qubits Q₀, Q₁, Q₂, and Q₃, sequentially, at the head of the latter portion 1820. Specifically, the information processing device 100 inserts the quantum gates 2301, 2302, and 2311 and thereby determines reallocation of the logical qubits q₀, q₁, q₂, and q₃ and the physical qubits Q₀, Q₁, Q₂, and Q₃ in the midst of processing the latter portion 1820. Specifically, the information processing device 100 generates a partial quantum circuit 2300 representing a result of inserting the quantum gates 2301, 2302, and 2311 into the latter portion 1820 according to the determined allocation method. Next, Fig. 24 will be described.

In Fig. 24, the information processing device 100 uses the quantum computing device 201 to execute the generated partial quantum circuit 2100 that corresponds to the initial portion 1810 of the dynamic quantum circuit 1700 and thereby identifies the current initial-portion path. In the example depicted in Fig. 15, the current initial-portion path represents "Loop 1: twice" which is a combination of determination results of the conditional branch 1710.

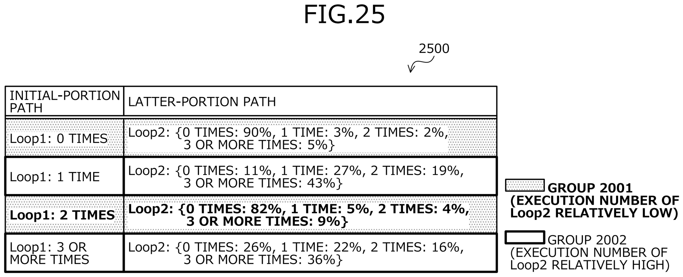

Thus, the information processing device 100 may start execution of the dynamic quantum circuit 1700. The information processing device 100 may obtain a criterion for estimating which of the generated partial quantum circuit 2200 and the generated partial quantum circuit 2300 corresponding to the latter portion 1820 of the dynamic quantum circuit 1700 is preferably executed. Next, Fig. 25 will be described.

In Fig. 25, as depicted in a table 2500, the information processing device 100 identifies that "Loop 1: twice" which is a combination of determination results of the conditional branch 1710 represented by the current initial-portion path belongs to the group 2001. Thus, the information processing device 100 may estimate that it is preferable to execute the partial quantum circuit 2200 generated and associated with the group 2001, which corresponds to the latter portion 1820 of the dynamic quantum circuit 1700.

The information processing device 100 uses the quantum computing device 201 to execute the partial quantum circuit 2200 generated and associated with the group 2001, which corresponds to the latter portion 1820 of the dynamic quantum circuit 1700 and thereby obtains the results of executing the dynamic quantum circuit 1700. The results of executing the dynamic quantum circuit 1700 include, for example, the results of measuring logical qubits at the end of the dynamic quantum circuit 1700. Thus, the information processing device 100 may complete the execution of the dynamic quantum circuit 1700.

For example, the information processing device 100 may appropriately allocate the physical qubits Q₀, Q₁, Q₂, and Q₃ to the dynamic quantum circuit 1700 and execute the dynamic quantum circuit 1700. Specifically, the information processing device 100 may easily switch the method of allocating the physical qubits Q₀, Q₁, Q₂, and Q₃ to the latter portion 1820 within the coherence time.

For example, even when a quantum gate, such as a swap gate, is inserted into the dynamic quantum circuit 1700, the information processing device 100 may suppress increases in the scale and depth of the dynamic quantum circuit 1700. Therefore, the information processing device 100 may reduce the processing load and the processing time necessary for executing the dynamic quantum circuit 1700, for example. For example, the information processing device 100 may reduce the probability that an error occurs in the quantum state, and may improve the reliability of the entire dynamic quantum circuit 1700.

Next, a third operation example of the information processing device 100 will be described with reference to Figs. 26 and 27. Specifically, in the first operation example and the second operation example, a case where the information processing device 100 divides the target dynamic quantum circuit 600 or 1700 into two parts is described. On the other hand, in the third operation example, a case where the information processing device 100 divides the target dynamic quantum circuit 2600 into three or more parts will be described.

Figs. 26 and 27 are explanatory diagrams depicting a third operation example of the information processing device 100. In Figs. 26 and 27, the information processing device 100 obtains a dynamic quantum circuit 2600 related to the logical qubits q₀, q₁, q₂, and q₃ and the classical bit c.

Since the dynamic quantum circuit 2600 is the same as the dynamic quantum circuit 600, elements forming the dynamic quantum circuit 2600 are denoted by the same reference numerals used for the elements forming the dynamic quantum circuit 600, and redundant description thereof is omitted. The information processing device 100 obtains the real machine information related to the quantum computing device 201.

The information processing device 100 divides the dynamic quantum circuit 600 into an initial portion 2610, an intermediate portion 2620, and a latter portion 2630. The initial portion 2610 is a range from the head to a dotted line 2601. The intermediate portion is a range from the dotted line 2601 to a dotted line 2602. The latter portion 2630 is a range from the dotted line 2602 to the end.

Accordingly, the information processing device 100 may specify the initial portion 2610 in which the method of allocating the physical qubits Q₀, Q₁, Q₂, and Q₃ is fixed. The information processing device 100 may specify the intermediate portion 2620 and the latter portion 2630 in which the method of allocating the physical qubits Q₀, Q₁, Q₂, and Q₃ is dynamically switched. In the following description, a range in which the initial portion 2610 and the intermediate portion 2620 are connected may be referred to as a "concatenated portion 2640".

The information processing device 100 compiles the dynamic quantum circuit 600 and controls the quantum computing device 201 to try the dynamic quantum circuit 600 multiple times. The information processing device 100 obtains, from the quantum computing device 201, multiple execution paths respectively representing combinations of determination results of the conditional branches 610, 630, and 650 obtained when the dynamic quantum circuit 600 is tried. Next, Fig. 27 will be described.

In Fig. 27, the information processing device 100 analyzes the obtained execution paths and generates first correspondence information related to a pair including the initial portion 2610 and the intermediate portion 2620. The first correspondence information represents a correspondence relationship between a combination of determination results of the conditional branch 610 in the initial portion 2610 and a combination of determination results of the conditional branch 650 in the intermediate portion 2620.

The information processing device 100 analyzes the obtained execution paths and generates second correspondence information related to a pair including the concatenated portion 2640 and the latter portion 2630. The second correspondence information represents a correspondence relationship between a combination of determination results of the conditional branches 610 and 630 in the concatenated portion 2640 and a combination of determination results of the conditional branch 650 in the latter portion 2630.

In the example depicted in Fig. 11, specifically, the information processing device 100 generates based on the obtained execution paths, multiple initial-portion paths respectively representing combinations of determination results of the conditional branches 610 in the initial portion 2610. Each of the initial-portion path represents, for example, one of "True" and "False" which are combinations of determination results of the conditional branch 610.

In addition, specifically, based on the obtained execution paths, the information processing device 100 generates intermediate-portion paths respectively corresponding to the initial-portion paths, each of the intermediate-portion paths representing the probability of a combination of the determination results of the conditional branches 630 in the intermediate portion 2620. The intermediate-portion path represents, for example, a probability of "True: 70%, False: 30%" for a combination of determination results of the conditional branch 630.

Specifically, based on the obtained execution paths, the information processing device 100 generates multiple concatenated paths each representing a combination of determination results of the conditional branches 610 and 630 in the concatenated portion 2640. Each of the concatenated paths represents, for example, one of "True→True", "True→False", "False→True", and "False→False", which are combinations of the determination results of the conditional branches 610 and 630.

In addition, specifically, based on the obtained execution paths, the information processing device 100 generates latter-portion paths respectively corresponding to the concatenated paths, each of the latter-portion paths representing a probability of a combination of determination results of the conditional branch 650 in the latter portion 2630. The latter-portion path represents, for example, a probability of "True: 70%, False: 30%" for a combination of determination results of the conditional branch 650.

Specifically, as depicted in a table 2700, the information processing device 100 generates correspondence information indicating a correspondence relationship between each initial-portion path and an intermediate-portion path corresponding to the initial-portion path. Specifically, as depicted in a table 2710, the information processing device 100 generates correspondence information indicating a correspondence relationship between each concatenated path and a latter-portion path corresponding to the concatenated path.

Thereafter, the information processing device 100 classifies the initial-portion paths into multiple groups based on the similarity of the intermediate-portion paths. For example, the information processing device 100 classifies into a same group 2701, one or more initial-portion paths in which the probability of True of the intermediate-portion path is equal to or higher than the probability of False. For example, the information processing device 100 classifies into a same group 2702, one or more initial-portion paths in which the probability of True of the intermediate-portion path is less than the probability of False.

The information processing device 100 classifies the concatenated paths into multiple groups based on the similarity of the latter-portion paths. For example, the information processing device 100 classifies into a same group 2711, one or more concatenated paths in which the probability of True of the latter-portion path is equal to or higher than the probability of False. For example, the information processing device 100 classifies into a same group 2712, one or more concatenated paths in which the probability of True of the latter-portion path is less than the probability of False.

The information processing device 100 determines a method of allocating the logical qubits q₀, q₁, q₂, and q₃ and the physical qubits Q₀, Q₁, Q2, and Q₃ to the initial portion 2610 of the dynamic quantum circuit 600, as in the first operation example and the second operation example. The information processing device 100 generates an initial-portion quantum circuit representing a result of inserting a quantum gate, such as a swap gate, into the initial portion 2610 according to the determined allocation method.

Similarly to the first operation example and the second operation example, the information processing device 100 determines the method of allocating the logical qubits q₀, q₁, q₂, and q₃ and the physical qubits Q₀, Q₁, Q₂, and Q₃ to the intermediate portion 2620 in association with the groups 2701 and 2702. The information processing device 100 generates an intermediate portion quantum circuit representing a result of inserting a quantum gate, such as a swap gate, into the intermediate portion 2620 according to the determined allocation method in association with each of the groups 2701 and 2702.

Similarly to the first operation example and the second operation example, the information processing device 100 determines and associates with the groups 2711 and 2712, the method of allocating the logical qubits q₀, q₁, q₂, and q₃ and the physical qubits _{Q0}, Q₁, Q₂, and Q₃ to the latter portion 2630. The information processing device 100 generates a latter-portion quantum circuit representing a result of inserting a quantum gate, such as a swap gate, into the latter portion 2630 according to the determined allocation method associated with each of the groups 2711 and 2712.

The information processing device 100 uses the quantum computing device 201 to execute the dynamic quantum circuit 2600, based on the initial-portion quantum circuit, the intermediate-portion quantum circuit, and the latter-portion quantum circuit. For example, the information processing device 100 identifies the current initial-portion path by executing the generated initial portion quantum circuit corresponding to the initial portion 2610. Thus, the information processing device 100 may start execution of the dynamic quantum circuit 600. The information processing device 100 may obtain a criterion for estimating which of the generated intermediate portion quantum circuits corresponding to the intermediate portion 2620 is preferably executed.

The information processing device 100 determines that it is preferable to execute the intermediate portion quantum circuit corresponding to the intermediate portion 2620 generated and associated with one of the groups 2701 and 2702 to which the current initial-portion path belongs. The information processing device 100 identifies the current concatenated path by executing the intermediate portion quantum circuit corresponding to the intermediate portion 2620 generated and associated with one of the groups 2701 and 2702 to which the current initial-portion path belongs. Thus, the information processing device 100 may continue to execute the dynamic quantum circuit 600 up to the intermediate portion 2620. The information processing device 100 may obtain a criterion for estimating which of the generated latter-portion quantum circuits corresponding to the latter portion 2630 is preferably executed.

The information processing device 100 determines that it is preferable to execute the latter-portion quantum circuit corresponding to the latter portion 2630 generated and associated with one of the groups 2711 and 2712 to which the current concatenated path belongs. The information processing device 100 executes the latter portion quantum circuit corresponding to the latter portion 2630 generated and associated with one of the groups 2711 and 2712 to which the current concatenated path belongs, thereby obtaining a result of executing the dynamic quantum circuit 2600. Thus, the information processing device 100 may complete the execution of the dynamic quantum circuit 2600.

For example, the information processing device 100 may appropriately allocate the physical qubits Q₀, Q₁, Q₂, and Q₃ to the dynamic quantum circuit 2600 and execute the dynamic quantum circuit 2600. Specifically, the information processing device 100 may easily switch the method of allocating the physical qubits Q₀, Q₁, Q₂, and Q₃ to the intermediate portion 2620 and the latter portion 2630 within the coherence time.

For example, even when a quantum gate, such as a swap gate, is inserted into the dynamic quantum circuit 2600, the information processing device 100 may suppress increases in the scale and depth of the dynamic quantum circuit 2600. Therefore, the information processing device 100 may reduce the processing load and the processing time necessary for executing the dynamic quantum circuit 2600, for example. For example, the information processing device 100 may reduce the probability that an error occurs in the quantum state, and may improve the reliability of the entire dynamic quantum circuit 2600.

Here, while a case where the information processing device 100 generates the first correspondence information regarding the pair including the initial portion 2610 and the intermediate portion 2620 and the second correspondence information regarding the pair including the concatenated portion 2640 and the latter portion 2630 is described, the present disclosure is not limited hereto. For example, the information processing device 100 may generate first correspondence information regarding a pair including the initial portion 2610 and the intermediate portion 2620 and second correspondence information regarding a pair including the intermediate portion 2620 and the latter portion 2630.

In this case, when executing the dynamic quantum circuit 2600, the information processing device 100 may switch the method of allocating the physical qubits Q₀, Q₁, Q₂, and Q₃ to the intermediate portion 2620 according to the current initial-portion path. When executing the dynamic quantum circuit 2600, the information processing device 100 may switch the method of allocating the physical qubits Q₀, Q₁, Q₂, and Q₃ to the latter portion 2630 according to the current intermediate-portion path.

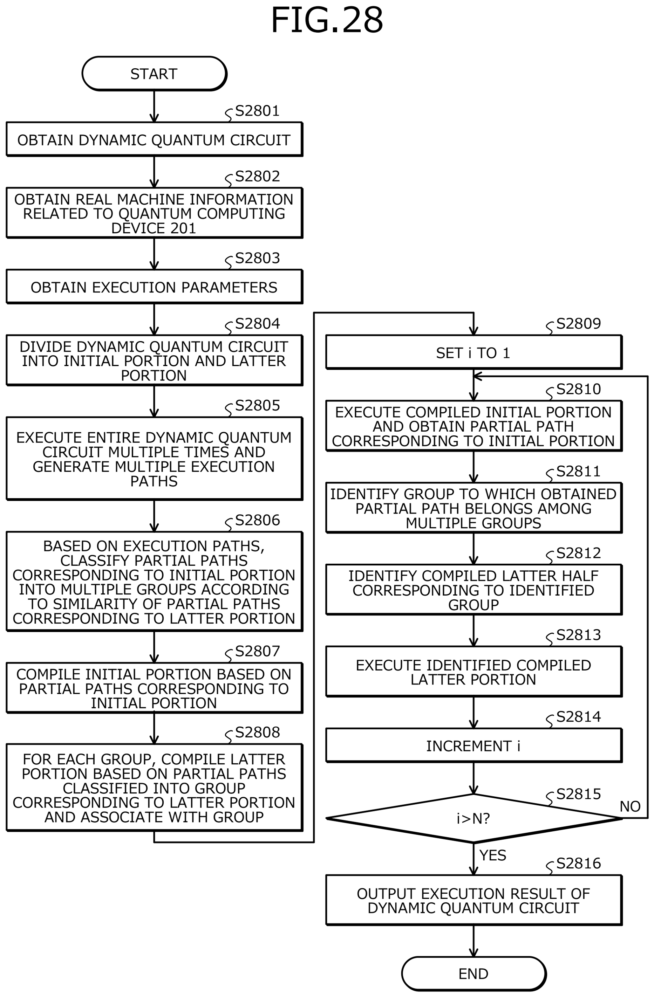

Next, an example of an overall processing procedure executed by the information processing device 100 using the quantum computing device 201 will be described with reference to Fig. 28. The overall processing is implemented by, for example, the CPU 301, storage areas such as the memory 302 and the recording medium 305, and the network I/F 303 depicted in Fig. 3.

Fig. 28 is a flowchart depicting an example of an overall processing procedure. In Fig. 28, the information processing device 100 obtains a dynamic quantum circuit (step S2801). Further, the information processing device 100 obtains real machine information related to the quantum computing device 201 (step S2802). Further, the information processing device 100 obtains an execution parameter (step S2803).

Next, the information processing device 100 divides the obtained dynamic quantum circuit into an initial portion and a latter portion (step S2804). Then, the information processing device 100 uses the quantum computing device 201 to execute the entire dynamic quantum circuit multiple times based on the obtained execution parameters, and generates multiple execution paths (step S2805).

Next, based on the execution paths, the information processing device 100 classifies the partial paths corresponding to the divided initial portion into multiple groups according to the similarity of the partial paths corresponding to the latter portion (step S2806).

Then, the information processing device 100 refers to the obtained real machine information and compiles the initial portion, based on the partial paths corresponding to the initial portion (step S2807). In addition, the information processing device 100 refers to and associates the obtained real machine information with each group and compiles the latter portion, based on the partial paths classified into the group corresponding to the divided latter portion (step S2808).

Next, the information processing device 100 sets i to 1 (step S2809). Then, the information processing device 100 uses the quantum computing device 201 to execute the compiled initial portion and obtain a partial path corresponding to the initial portion (step S2810).

Next, the information processing device 100 identifies the group to which the obtained partial path belongs among the multiple groups (step S2811). Then, the information processing device 100 identifies the compiled latter portion corresponding to the identified group (step S2812).

Next, the information processing device 100 uses the quantum computing device 201 to execute the identified compiled latter portion (step S2813). Then, the information processing device 100 increments i (step S2814).

Next, the information processing device 100 determines whether i>N is satisfied (step S2815). When i>N is not satisfied (step S2815: NO), the information processing device 100 proceeds to the process at step S2810. On the other hand, when i>N is satisfied (step S2815: YES), the information processing device 100 proceeds to the process at step S2816.

At step S2816, the information processing device 100 outputs the execution result of the dynamic quantum circuit (step S2816). Then, the information processing device 100 ends the entire process. Thus, the information processing device 100 may appropriately allocate the physical qubits to the dynamic quantum circuit and execute the dynamic quantum circuit.

Here, the information processing device 100 may change the order of the processes of some steps in Fig. 28. For example, the order of the processes at steps S2801 to S2803 may be interchanged. In addition, the information processing device 100 may omit the processes of some steps in Fig. 28. For example, the processes at steps S2809 to S2816 may be omitted.

As described above, according to the information processing device 100, it is possible to specify a first portion that is included in a quantum circuit having multiple conditional branches and that has one or more first conditional branches and a second portion that is downstream to the first portion and has one or more second conditional branches. According to the information processing device 100, it is possible to obtain multiple execution paths respectively representing combinations of determination results of conditional branches in the quantum circuit, based on results of executing the quantum circuit multiple times. According to the information processing device 100, by referring to the execution paths, the combinations of the determination results of the first conditional branches in the specified first portion may be classified into multiple groups based on the similarity of the combinations of the determination results of the second conditional branches in the specified second portion. According to the information processing device 100, it is possible to generate first information indicating the method of allocating multiple physical qubits to the first portion. According to the information processing device 100, it is possible to generate second information indicating the method of allocating multiple physical qubits to the second portion associated with the group, based on the combination of the determination results of the second conditional branch in the second portion and corresponding to each of the groups. According to the information processing device 100, it is possible to control the executing unit to allocate the physical qubits to the first portion according to the generated first information and execute the first portion. According to the information processing device 100, it is possible to control the executing unit to execute the second portion by allocating the physical qubits to the second portion according to the second information corresponding to the group to which the current combination of the determination results of the first conditional branch belongs, after executing the first portion. As a result, the information processing device 100 may execute the quantum circuit by allocating physical qubits to the quantum circuit while reducing the scale and depth of the quantum circuit during execution thereof.

According to the information processing device 100, the quantum circuit is divided into the first portion having the first number of conditional branches as the first conditional branches and the second portion having the second number of conditional branches as the second conditional branches according to a predetermined rule, whereby the first portion and the second portion may be specified. Accordingly, the information processing device 100 may specify the first portion and the second portion even when the first portion and the second portion are not set in advance.

According to the information processing device 100, it is possible to obtain multiple execution paths based on the results of executing the quantum circuit multiple times, the results being obtained by controlling the executing unit to execute the quantum circuit. As a result, the information processing device 100 may control the executing unit to actually execute the quantum circuit and obtain multiple execution paths.

According to the information processing device 100, when the quantum circuit has a conditional branch corresponding to an if statement, it is possible to obtain multiple execution paths each including True or False as a determination result in the if statement. Accordingly, the information processing device 100 may obtain an execution path including information serving as a guideline for allocating multiple physical qubits to a quantum circuit.

According to the information processing device 100, when the quantum circuit has a conditional branch corresponding to a while statement, it is possible to obtain multiple execution paths each including a loop count, which is a determination result in the while statement. Accordingly, the information processing device 100 may obtain an execution path including information serving as a guideline for allocating multiple physical qubits to a quantum circuit.

According to the information processing device 100, by inserting the first swap gate into the first portion, it is possible to generate the first information indicating the method of allocating multiple physical qubits at the head of the first portion and the method of allocating multiple physical qubits in the midst of processing the first portion. According to the information processing device 100, for example, the first information may be generated such that the number of times of inserting the first swap gate into the first portion is reduced. As a result, the information processing device 100 may generate the first information by appropriately allocating the physical qubits to the first portion.

According to the information processing device 100, it is possible to generate the second information indicating the method of allocating multiple physical qubits to the head of the second portion and the method of allocating multiple physical qubits in the midst of processing the second portion by inserting the second swap gate into the second portion. According to the information processing device 100, for example, based on the combination of the determination results of the second conditional branches corresponding to the respective groups, it is possible to generate and associated with the group, the second information such that the number of times of inserting the second swap gate into the second portion is reduced. Thus, the information processing device 100 may appropriately allocate the physical qubits to the second portion to thereby generate the second information.

According to the information processing device 100, it is possible to classify the combinations of the determination results of the first conditional branches into the multiple groups based on the similarity of the combinations of the determination results of the second conditional branches, by referring to the execution paths, using the clustering method. Accordingly, the information processing device 100 may accurately classify the combinations of the determination results of the first conditional branches into multiple groups.

According to the information processing device 100, it is possible to divide the quantum circuit into the first portion having the first number of conditional branches not more than the predetermined upper limit value as the first conditional branches and the second portion having the second number of conditional branches as the second conditional branches. Accordingly, the information processing device 100 may relatively increase the scale of the second portion for dynamically switching the method of allocating the multiple physical qubits.

According to the information processing device 100, it is possible to control the executing unit provided in the information processing device 100. Thus, the information processing device 100 may execute the quantum circuit therein.

According to the information processing device 100, it is possible to control the executing unit which is an actual machine of a quantum computer provided external to the information processing device 100. Thus, the information processing device 100 may control the executing unit to execute the quantum circuit externally.

According to the information processing device 100, it is possible to specify three or more portions that are included in a quantum circuit having multiple conditional branches, each of the three or more portions having one or more conditional branches. According to the information processing device 100, it is possible to obtain multiple execution paths respectively representing combinations of determination results of conditional branches in the quantum circuit, based on results of executing the quantum circuit multiple times. According to the information processing device 100, by referring to the execution paths, for each portion excluding the head portion, combinations of determination results of conditional branches in one or more portions upstream to the portion may be classified into multiple groups. According to the information processing device 100, it is possible to generate the first information indicating the method of allocating the multiple physical qubits to the head portion. According to the information processing device 100, it is possible to generate and associate with each the classified groups, the second information indicating the method of allocating the multiple physical qubits to each portion excluding the head portion. According to the information processing device 100, it is possible to control the executing unit to allocate the physical qubits to the head portion and execute the head portion according to the generated first information. According to the information processing device 100, it is possible to control the executing unit so as to sequentially execute each portion excluding the head portion, after executing the head portion. According to the information processing device 100, it is possible to allocate physical qubits to a portion to be executed according to the second information generated and associated with a group to which a current combination of determination results of conditional branches in one or more portions upstream to the portion to be executed belongs. Accordingly, the information processing device 100 may dynamically allocate multiple physical qubits to each portion excluding the head portion among the three or more portions. The information processing device 100 may improve the reliability of the quantum circuit.

The information processing method described in the present embodiment may be implemented by executing a prepared program on a computer such as a personal computer and a workstation. The program is stored on a non-transitory, computer-readable recording medium such as a hard disk, a flexible disk, a compact disc read-only memory (CD-ROM), a magneto-optical (MO) disc, and a digital versatile disc (DVD), read out from the computer-readable medium, and executed by the computer. The program may be distributed through a network such as the Internet.

An embodiment of the present disclosure achieves an effect in that physical qubits may be suitably allocated to logical qubits.

All examples and conditional language provided herein are intended for pedagogical purposes of aiding the reader in understanding the embodiments of the invention and the concepts contributed by the inventor to further the art, and are not to be construed as limitations to such specifically recited examples and conditions, nor does the organization of such examples in the specification relate to a depicting of the superiority and inferiority of the invention. Although one or more embodiments of the present disclosure have been described in detail, it should be understood that the various changes, substitutions, and alterations could be made hereto without departing from the spirit and scope of the invention.

In any of the above aspects, the various features may be implemented in hardware, or as software modules running on one or more processors/computers. The present disclosure also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program may be stored on a non-transitory computer-readable medium, or it could, for example, be in the form of a signal such as a downloadable data signal provided from an Internet website, or it could be in any other form.

## Claims

1. An information processing program for causing a computer to execute a process, the process comprising:
specifying in a quantum circuit having a plurality of conditional branches, a first portion having one or more first conditional branches and a second portion being downstream to the first portion and having one or more second conditional branches, the one or more first conditional branches and the one or more second conditional branches being included in the plurality of conditional branches;
obtaining a plurality of execution paths respectively representing a plurality of combinations of determination results of the plurality of conditional branches in the quantum circuit, the plurality of execution paths being obtained based on a result of executing the quantum circuit a plurality of times using a quantum computer having a plurality of physical qubits, the plurality of combinations of the determination results including a first plurality of combinations of the determination results of the one or more first conditional branches in the first portion and a second plurality of combinations of the determination results of the one or more second conditional branches in the second portion;
referring to the obtained plurality of execution paths and thereby classifying the first plurality of combinations into a plurality of groups based on similarity among the second plurality of combinations;
generating first information representing a method of allocating the plurality of physical qubits to the first portion;
for each of the plurality of groups, generating and associating with the each of the plurality of groups, second information representing the method of allocating the plurality of physical qubits to the second portion, the second information being generated based on the second plurality of combinations of the determination results; and
controlling the quantum computer configured to execute the quantum circuit to allocate the plurality of physical qubits to the first portion according to the generated first information and execute the first portion, and to subsequently allocate the plurality of physical qubits to the second portion according to the generated second information and execute the second portion, the second information being associated with a group that is among the plurality of groups and to which a current combination of the first plurality of combinations belongs, the current combination being in the executed first portion.

2. The information processing program according to claim 1, wherein the specifying includes dividing the quantum circuit into the first portion having a first number of conditional branches as the one or more first conditional branches and the second portion having a second number of conditional branches as the one or more second conditional branches, according to a predetermined rule, thereby specifying the first portion and the second portion.

3. The information processing program according to claim 2, wherein the first number is not more than a predetermined upper limit value.

4. The information processing program according to any of the preceding claims, wherein the obtaining includes obtaining the plurality of execution paths based on the result of executing the quantum circuit the plurality of times, the result being obtained by controlling the quantum computer to execute the quantum circuit.

5. The information processing program according to any of the preceding claims, wherein when the plurality of conditional branches of the quantum circuit includes a conditional branch corresponding to an if statement, each of the plurality of execution paths includes True or False as a determination result in the if statement.

6. The information processing program according to any of the preceding claims, wherein when the plurality of conditional branches of the quantum circuit includes a conditional branch corresponding to a while statement, the each of the plurality of execution paths includes a loop count that is a determination result in the while statement.

7. The information processing program according to any of the preceding claims, wherein
the first information represents the method of allocating the plurality of physical qubits at a head of the first portion and the method of allocating the plurality of physical qubits in a midst of processing the first portion by inserting a first swap gate into the first portion, and
the generating the first information includes generating the first information such that a number of times the first swap gate is inserted into the first portion is reduced.

8. The information processing program according to any of the preceding claims, wherein
the second information represents the method of allocating the plurality of physical qubits at a head of the second portion and the method of allocating the plurality of physical qubits in a midst of processing the second portion by inserting a second swap gate into the second portion, and
the generating the second information includes for each of the plurality of groups, generating and associating with the each of the plurality of groups, the second information such that a number of times of inserting the second swap gate into the second portion is reduced.

9. The information processing program according to any of the preceding claims, wherein the classifying includes classifying the first plurality of combinations based on the similarity of among the second plurality of combinations of the determination results of the second conditional branch in the second portion by referring to the obtained plurality of execution paths using a clustering method.

10. The information processing program according to any of claims 1 to 9, wherein the quantum computer is provided in the computer.

11. The information processing program according to any of claims 1 to 9, wherein the quantum computer external to the computer.

12. The information processing program according to any of the preceding claims , wherein
the specifying includes specifying three or more portions included in the quantum circuit, each of the three or more portions having one or more of the plurality of conditional branches,
the obtaining the plurality of execution paths respectively representing the plurality of combinations of the determination results of the plurality of conditional branches in the quantum circuit, the plurality of execution paths being obtained based on the result of executing the quantum circuit the plurality of times using the quantum computer,
the referring to the obtained plurality of execution paths and the classifying include for each of the specified three or more portions excluding a head portion, classifying into the plurality of groups, the plurality of combinations of the determination results of the plurality of conditional branches in one or more of the specified three or more portions upstream to the each of the specified three or more portions, the plurality of combinations being classified based on similarity of the determination results of the plurality of conditional branches in the each of the specified three or more portions,
the generating the first information includes generating the first information representing the method of allocating the plurality of physical qubits to the head portion,
the generating the second information includes, for each of the three or more portions excluding the head portion, generating for and associating with the each of the plurality of the groups, the second information indicating the method of allocating the plurality of physical qubits to the each of the three or more portions, the second information being generated based on a third plurality of combinations of the determination results of the plurality of conditional branches in the each of the three or more portions, and
the controlling includes controlling the quantum computer to allocate the plurality of physical qubits to the head portion according to the generated first information, and when sequentially executing the three or more portions excluding the head portion after executing the head portion, controlling the quantum computer to allocate the plurality of physical qubits to the each of the three or more portions according to the second information generated and associated with the each of the pluralities of groups to which belongs the current combination of the determination results of the conditional branches in one or more of the three or more portions, upstream to the each of the three or more portions.

13. An information processing method executed by a computer, the method comprising:
specifying in a quantum circuit having a plurality of conditional branches, a first portion having one or more first conditional branches and a second portion being downstream to the first portion and having one or more second conditional branches, the one or more first conditional branches and the one or more second conditional branches being included in the plurality of conditional branches;
obtaining a plurality of execution paths respectively representing a plurality of combinations of determination results of the plurality of conditional branches in the quantum circuit, the plurality of execution paths being obtained based on a result of executing the quantum circuit a plurality of times using a quantum computer having a plurality of physical qubits, the plurality of combinations of the determination results including a first plurality of combinations of the determination results of the one or more first conditional branches in the first portion and a second plurality of combinations of the determination results of the one or more second conditional branches in the second portion;
referring to the obtained plurality of execution paths and thereby classifying the first plurality of combinations into a plurality of groups based on similarity among the second plurality of combinations;
generating first information representing a method of allocating the plurality of physical qubits to the first portion;
for each of the plurality of groups, generating and associating with the each of the plurality of groups, second information representing the method of allocating the plurality of physical qubits to the second portion, the second information being generated based on the second plurality of combinations of the determination results; and
controlling the quantum computer configured to execute the quantum circuit to allocate the plurality of physical qubits to the first portion according to the generated first information and execute the first portion, and to subsequently allocate the plurality of physical qubits to the second portion according to the generated second information and execute the second portion, the second information being associated with a group that is among the plurality of groups and to which a current combination of the first plurality of combinations belongs, the current combination being in the executed first portion.

14. An information processing device, comprising:
a memory; and
a processor coupled to the memory, the processor configured to:
specify in a quantum circuit having a plurality of conditional branches, a first portion having one or more first conditional branches and a second portion being downstream to the first portion and having one or more second conditional branches, the one or more first conditional branches and the one or more second conditional branches being included in the plurality of conditional branches;
obtain a plurality of execution paths respectively representing a plurality of combinations of determination results of the plurality of conditional branches in the quantum circuit, the plurality of execution paths being obtained based on a result of executing the quantum circuit a plurality of times using a quantum computer having a plurality of physical qubits, the plurality of combinations of the determination results including a first plurality of combinations of the determination results of the one or more first conditional branches in the first portion and a second plurality of combinations of the determination results of the one or more second conditional branches in the second portion;
refer to the obtained plurality of execution paths and thereby classify the first plurality of combinations into a plurality of groups based on similarity among the second plurality of combinations;
generate first information representing a method of allocating the plurality of physical qubits to the first portion;
for each of the plurality of groups, generate and associate with the each of the plurality of groups, second information representing the method of allocating the plurality of physical qubits to the second portion, the second information being generated based on the second plurality of combinations of the determination results; and
control the quantum computer configured to execute the quantum circuit to allocate the plurality of physical qubits to the first portion according to the generated first information and execute the first portion, and to subsequently allocate the plurality of physical qubits to the second portion according to the generated second information and execute the second portion, the second information being associated with a group that is among the plurality of groups and to which a current combination of the first plurality of combinations belongs, the current combination being in the executed first portion.

15. A computer-readable storage medium having the computer program of any of claims 1 to 12 stored thereon.
